# EUROPEAN PATENT SPECIFICATION

(11) **EP 3 922 081 B1**
(45) Date of publication and mention of the grant of the patent: **30.11.2022**
(21) Application number: 20706603.6
(22) Date of filing: 05.02.2020
(51) Int. Cl.: H05B 6/54, A23L 3/01, A23L 3/04, H05B 6/60, H05B 6/62

(54) **DEVICE AND METHOD FOR HOMOGENEOUSLY HEAT-TREATING A PRODUCT BY RADIO FREQUENCY**
VORRICHTUNG UND VERFAHREN ZUR HOMOGENEN WÄRMEBEHANDLUNG EINES PRODUKTES MITTELS HOCHFREQUENZ
DISPOSITIF ET PROCÉDÉ DE TRAITEMENT THERMIQUE HOMOGÈNE D'UN PRODUIT PAR RADIOFRÉQUENCE

(30) Priority: 05.02.2019 NL 2022508
(43) Date of publication of application: 15.12.2021
(73) Proprietor: Top B.V., 6708 PW Wageningen (NL)
(72) Inventor: VAN DEN BOSCH, Henricus Franciscus Maria, 6708 PW Wageningen (NL); BUNT, Teunis, 6708 PW Wageningen (NL)
(74) Representative: EDP Patent Attorneys B.V.
(86) International application number: PCT/NL2020/050063
(87) International publication number: WO 2020/162748

(56) References cited:
- EP-A1- 2 503 895
- EP-A1- 2 666 371
- WO-A1-2016/065303
- US-A1- 2013 168 386

## Description

### FIELD OF THE INVENTION

The invention relates to a heat treatment system and a method for heat-treating a product. The invention further relates to a cartridge for transporting a product through a duct of a heat treatment apparatus.

### BACKGROUND OF THE INVENTION

Processes to heat-treat food products using radio frequency are known in the art. WO2016065303 for instance describes a radio frequency (RF) heating system and process for rapidly and uniformly heating a plurality of articles on a conveyor line, the system comprising an RF generator connected to the RF waveguide which conveys RF energy to an RF heating chamber conducting RF energy to a conveyor configured to convey articles through the RF heating chamber.

EP 2 666 371 describes an apparatus for heat-treating a packaged food product, comprising a duct surrounding a duct interior, a pressurizer, a transport unit, a first electrode, surrounding at least part of the duct interior over a first electrode length, an electrode configuration comprising a second electrode, and a radio frequency wave generator configured to generate RF-waves between the first and second electrode. US2013168386 discloses another device for heating products by means of a high-frequency electromagnetic alternating field, according to the prior art.

### SUMMARY OF THE INVENTION

Prior art systems may have the disadvantage that they do not efficiently couple energy into the system. Especially, they may not couple the energy efficiently into the product to be treated. The energy may be coupled in too heterogeneously resulting in (local) overheating and hot spots or in (local) under heating and cold spots in the products. Prior art solutions also do not seem to be capable to sterilize food products without losing a substantial share of the product quality.

Hence, it is an aspect of the invention to provide an alternative treatment system and/or an alternative method for heat-treating a (packaged food) product, which preferably further at least partly obviate one or more of above-described drawbacks. It is a further objective of the invention to provide a cartridge for transporting a (packaged food) product through an RF heating zone in a duct of a heat treatment apparatus. The present invention may have as object to overcome or ameliorate at least one of the disadvantages of the prior art, or to provide a useful alternative.

Hence, in a first aspect, the invention provides a heat treatment system ("system"), especially for heat-treating a (packaged) product, especially a (packaged) food product, especially in a method for heat-treating a ((packaged) food). The heat treatment system comprises a heat treatment apparatus ("apparatus") and a product transport system ("transport system"). The heat treatment apparatus essentially comprises (i) a duct having a (central) duct axis, wherein the duct is configured for holding (hosting) a (pressurized) liquid (especially wherein the duct holds the liquid during operation of the system), and (ii) an RF heating zone ("heating zone") comprising a main electrode and (at least) a (first) counter electrode configured for functionally connecting to an RF generator to generate (during operation of the RF generator) a (first) electric field in the duct between the main electrode and the (first) counter electrode, especially (wherein the (first) electric field is configured (at a location) between the (two) electrodes) parallel to the duct axis.

The product transport system (at least) comprises an electric field guiding element ("field-guiding element") comprising (an) electrically conductive material. The electric field guiding element is especially configured to be electrically insulated from the electrodes (especially from the main electrode, the (first) counter electrode and an optional further counter electrode) (during operation) during transport through the duct. The product transport system is especially configured to transport a product and the electric field guiding element through the duct, e.g., batch-wise and/or continuously (see below).

In a further aspect, the invention provides a cartridge for transporting a (packaged) product, especially a (packaged) food product, through a duct of a heat treatment apparatus (especially of an apparatus of the system described herein), especially of a heat treatment apparatus (configured for) comprising an electric field generated in the duct (in an RF heating zone) (between a main electrode and a (first) counter electrode and optionally (also) between the main electrode and a further counter electrode) by an RF generator, especially (functionally) coupled to the electrodes. The cartridge, essentially, comprises an assembly of (i) an electric field guiding element comprising (an) electrically conductive material (especially the electric field guiding element of the system of the invention) and (ii) a product receiver comprising (an) electrically insulating material. The product receiver especially comprises a cavity to host the product. The cartridge may further comprise a liquid channel providing a fluid connection between the cavity and (an) external of the cartridge. The term "liquid channel" may especially relate to a plurality of (different) liquid channels.

In yet a further aspect, the invention provides a method for heat-treating a (packaged) product, especially a (packaged) food product, especially in the system described herein. The method comprising: (i) transporting the product and an electric field guiding element through an RF heating zone in (/of) a duct (of a heat treatment apparatus) along a duct axis of the duct, wherein the duct comprises a (pressurized) liquid, and (ii) generating an electric field (in the RF heating zone, especially) in the duct between a main electrode and at least one counter electrode, especially (wherein the electric field is configured substantially) parallel to the duct axis.

With such system, such cartridge and such method efficiently energy may be coupled into the (packaged food) product. Further, with such system, such cartridge, and such method, packaged food products may be heat-treated, for instance for heating a meal and/or for pasteurizing of a food product and especially for sterilization of a food product. The (packaged) (food) product may especially homogeneously be heat-treated and hot and/or cold spots may be prevented. A further advantage of the present system, cartridge, and method is that it may be configured to be used in a continuous process as well as a (semi) batch process. Hence, in an embodiment, the method for heat-treating the (packaged) (food) product comprises a batch process. In a further embodiment, the method comprises a continuous process. The continuous process may in embodiments, comprise a (repetitive) step-by-step or step-wise process, especially wherein transporting the product comprises repetitive discrete movements of the product to transport the product (especially in a direction of transport) (through the duct).

Due to the configuration of the system, and especially the configuration of the electric field guiding element, energy may be homogeneously provided to the product, without the creation of hot spots inside the product as well as inside the system, and without substantial loss of energy to the surroundings. Further, due to the transporting through the duct, all (food) products may be subjected to the same conditions, even when there are local variations within the duct of the RF-field.

The system, the cartridge, and the method are herein especially further explained with respect to a packaged food product as a specific embodiment of a product. The product not necessarily is a food product, nor is the product necessarily a packaged product. Furthermore, the term "product" may relate to a plurality of (different) products. Hence, in the method different (food) products may be heat-treated in the same batch or run and/or at the same moment.

The method that may be applied with the system described herein is herein indicated as "a method for heat-treating a product", in specific embodiments "a method for heat-treating a packaged food product", (further also shortly indicated as "a method for heat-treating", a "heat-treating method" or simply "method"). The system described herein is especially suitable for heat-treating a packaged food product in such method for heat-treating. Furthermore, the cartridge described herein is especially suitable for transporting a product described herein, through a duct of a (RF) heat treatment apparatus described herein. Yet, in embodiments, the cartridge may be configured for transporting a product through a duct of an alternative (RF) heat treatment apparatus. Furthermore, the cartridge is especially configured for facilitating homogeneously heat-treating a product in the cartridge. Herein, the terms "electric field guiding element" and "field-guiding element" may be used interchangeably, especially both relating to an element that may guide and/or direct an electric field

The terms "heat-treating" and "heat treatment" may relate to heating the product and may in a embodiments also relate to pasteurizing the (food) product. The terms may especially relate to sterilizing the (food) product. In an embodiment, the heat treatment may comprise heating the food product (surrounded by the liquid) within the duct (especially within the RF heating zone) to a heating temperature in the range of 50-150 °C, such as 85-130 °C, such as 90-99 °C, or to a heating temperature of at least 100 °C, such as at least 121 °C, and e.g. equal to or below 150 °C, especial equal to or below 134 °C, such as equal to or below 125 °C. The heat treatment may further comprise (severe) pasteurization of the food product, such as at a (heating) temperature selected from the range of 92-99 °C, especially 92-96 °C, even more especially 93-95 °C. In embodiments, heat-treating is performed at a (heating) temperature below the boiling point of water at atmospheric pressures. Yet, in further embodiments, heat-treating may be performed at a (heating) temperature above 100 °C. To prevent boiling of water in the food product and/or in the duct, the method may comprise heat-treating at an elevated pressure. Hence, especially the liquid in the duct may be a pressurized liquid (see also below). Moreover, (elements of) the system (especially of the apparatus), such as the duct may be configured for holding a pressurized liquid (as well as a heating temperature described herein).

Hence, with the method and system, the product, especially the product in the package, can be heat-treated, such as for sterilizing or pasteurizing purposes; however, the method, the system and the cartridge may also be applied for other purposes.

The system may be configured for heat-treating packaged food products. In principle, the system may also be applied for heat-treating other types of packaged products, such as a packaged pharmaceutical product, a packaged nutraceutical product, a packaged (medical) tool, etc., and/or an un-packaged product. Hence, in a further aspect, the invention provides such system as described herein for heat-treating a (packaged) product (*per se*)*.*

Especially, the food product comprises a product selected from the group consisting of a meal, a meal component, a potato, a vegetable, meat, a dairy product, and a soup. As will be clear to a person skilled in the art, the food product may also comprise a combination of products, such as a food product comprising potatoes, vegetable(s) and meat. The term food product may relate to any product that is intended for oral human (or animal) consumption. The term may thus also refer to a feed product.

Especially, the food product is packaged. As a result of the package, the (packaged) food product can be transported with or through the liquid, as the duct is filled with liquid during operation of the system (see also below). Hence, during operation, the packaged food product may substantially be surrounded by the (pressurized) liquid. In embodiments, during operation, the product is surrounded by the liquid. The (packaged) product may in embodiments be arranged in the product receiver (of the cartridge), especially (before, after, and/or) during operation. The (packaged) product may be arranged in the cavity of the product receiver (during operation). Hence, in embodiments, the (packaged) product is (also) substantially surrounded by the product receiver. In embodiments, the cavity is configured such that the product may be arranged in the cavity, wherein the liquid may surround the product in the cavity. The liquid surrounding the product is especially in fluid connection with the liquid channel of the cartridge, during operations. Moreover, the liquid channel may in embodiments comprise the cavity. The liquid channel especially comprises a volume between the cavity and the product surrounded by the cavity (when hosting a product). When the cavity hosts a product, the product may contact a wall of the cavity, which may prevent a liquid flow between (a part of) the wall of the cavity and the product. Therefore, in embodiments, the wall of the cavity may comprise a determined profile, such as a serrated edge, that may define the liquid channel in the cavity when the cavity hosts a product. In embodiments, the wall of the cavity and the product (together) define at least part of the liquid channel. Furthermore, a profile, especially a serrated edge may provide a turbulent flow of the liquid around the product facilitating heat transfer from the liquid to the product. During operations, the fluid may flow through the cavity (and along the product). The method may comprise the consecutive stages of (i) arranging the product in the product receiver, (ii) (transporting the cartridge through the duct and) heat-treating the product in the RF heating zone, and (iii) removing the heat-treated product from the cartridge.

The product may especially be packaged. Especially, the package (of the packaged (food) product) is electrically insulating. The electrical resistivity (p) may for instance be at least 5·10⁴ Ω·m (at 20 °C), such as at least 1·10⁵ Ω·m (at 20 °C), especially at least 1·10⁸ Ω·m (at 20 °C), even more especially at least 1·10¹² Ω·m (at 20 °C), such as a package of poly ethylene (PE), like HDPE or LDPE, etc. (see also other examples of suitable materials below in relation to the material of the duct wall).

The packaged food product may in embodiments comprise a rectangular tray type of package, such as commonly used in food packaging, e.g. for microwavable food products/meals. Such tray may e.g. comprise a slanted or sloped brick-like shape or (sloped) cuboid shape. The packaged food product may in embodiments comprise a "brick" like (flow) package. The package may for instance have a length selected from the range of 5-100 cm, such as selected in the range of 10-25 cm. A height of the package may e.g. be selected from the range of 1-50 cm, especially selected in the range from 3-10 cm, even more especially from the range of 4-6 cm. A width of the package may be selected from the range of 1-50 cm, such as 1-15 cm. In further embodiments, the packaged food product comprises a (flexible) pouch, a bag or a packet (comprising the food product). The volume of the packaged food product, at room temperature and atmospheric pressure may for instance be in the range of 0.1-10 dm³, such as 0.5-5 dm³. Especially, the cartridge may be configured for hosting a product (or a plurality of products) having the height x the width x the length selected from the range of 1-10 cm x 10-20 cm x 15-25 cm. In embodiments, the cavity in the cartridge is configured to match (a shape of) the product. In an embodiment, a volume of the cavity in the cartridge may comprise 0.4-4 dm³, such as 0.5-2 dm³.

The apparatus especially comprises a duct through which one or more products may be transported, especially by the product transport system ("transport system"), especially in the cartridge. Herein the term "duct" especially refers to "a tube", "a pipe", "a channel", "an elongated (open) vessel", "piping", etc. that may hold the liquid, and especially in which the product (and the field-guiding element) may be transported through the apparatus, e.g. through the RF heating zone, especially in a direction of transport or "transport direction" (or "propagation direction"/"direction of propagation"). Hence, also terms like "tube", "pipe", "piping", "conduit", etc. may be used to refer to the duct. The product may be transported in combination with the field-guiding element. The transport system is especially configured for transporting the product with the field-guiding element through the duct. In specific embodiments, the transport system comprises the cartridge, and especially the transport system is configured for transporting the cartridge (hosting the product) through the duct. Over at least part of a length of the duct, the product may be treated. The product is especially heat-treated in the RF heating zone, especially in (a) region(s) between the main electrode and one or more of the counter electrodes. The product may further be heat-treated (in the duct) in a holding zone configured downstream from the RF heating zone (see also below). Additionally or alternatively, the product may be heat-treated upstream of the (RF) heating zone.

The duct comprises a wall and a space surrounded by the wall. During operation, the duct (or the space of the duct) is in general substantially entirely filled with liquid. The duct is especially elongated and has a duct axis or elongation axis. Over at least part of the length of the duct, and at least at the RF heating zone, during processing, the duct will completely be filled with the liquid (in addition to e.g. one or more products in combination with one or more field-guiding elements (or cartridges) when during processing such one or more products are transported through the heating zone). A cross-section of the duct (especially over the heating zone), (especially perpendicular to the duct axis) may be square, rectangular, circular, oval, elliptical, etcetera. The cross-section of the duct (especially over the heating zone) may especially be selected from the group consisting of circular, oval, elliptical, rectangular and square, even more especially circular. In embodiments, the transport direction is configured parallel to the duct axis (during transport of the product through the duct).

A (shortest) distance from the duct axis to the wall may be in the range of for instance 15-500 mm, especially 100-300 mm. Within one cross-section, the distance from the duct axis to the wall may be identical over the entire cross-section (circular) and thus be identical to the shortest distance. Yet, the distance over the cross-section may include different distances (like in all other cases except circular). Hence, the distance from the duct axis to the wall may be larger than the shortest distance. Moreover, the terms "surrounding" and "circumferential" do not necessarily refer to round/circular items, but in general indicate the perimeter, e.g. with respect to the duct, but also from the shield or mantel (see below).

The wall may comprise the electrodes, especially the main electrode and one or more of the counter electrodes (especially in the RF heating zone), see further below. The wall may further comprise an electrically insulating material especially configured between (and enclosed by) the electrodes (and especially also adjacent to the electrodes). Like for the package of the packaged (food) product, for the insulating material of the wall, the electrical resistivity (p) may for instance be at least 1·10⁵ Ω·m (at 20 °C), especially at least 1·10⁸ Ω·m (at 20 °C), even more especially at least 1·10¹² Ω·m (at 20 °C).

The insulating material may e.g. be selected from the group consisting of polyethylene (PE), polypropylene (PP), polyethylene naphthalate (PEN), polycarbonate (PC), polymethylacrylate (PMA), polymethylmethacrylate (PMMA), cellulose acetate butyrate (CAB), silicone, polyvinylchloride (PVC), polyethyleneterephthalate (PET), glycol modified polyethyleneterephthalate (PETG), polydimethylsiloxane (PDMS), cyclo olefin copolymer (COC), polyether ether ketone (PEEK), poly(phenyl)sulfone (P(P)SU), polyethyleneamine (PEA), polyethyleneimine (PEI), polyimide (PI), poly(phenylene oxide) (PPO) and polybenzimidazole (PBI). As will be clear to a person skilled in the art, also a combination of (such) materials may be applied.

The duct is essentially configured for holding and optionally transporting the liquid. The liquid used in the duct may especially be de-ionized water or oil, or a combination thereof. Hence, in an embodiment, the liquid comprises one or more of de-ionized water and oil. As discussed above, the system may be operated at a (heating) temperature above 100 °C, and at a treatment pressure above 1 bar (absolute). In embodiments, the treatment pressure is selected from the range of 1-10 bara (i.e. bar absolute), especially 1.5-6 bar (absolute), such as 2-5 bara. Hence, the duct is especially configured (at least at the heating zone) for holding (and optionally transporting) the liquid at the pressures and (heating) temperatures given above.

Therefore, the system may further comprise a pressurizer. Such pressurizer may include a pump, to bring the liquid (within the duct, and at least in the heating zone) at the desired (treatment) pressure. Alternatively or additionally, the pressurizer may comprise one or more pressure towers (sometimes also indicated as "tower-type sterilizer" or "water column" or "water column type sterilizer"), i.e. columns with liquid that can be used to build up pressure. Upstream and downstream of the heating zone, pressure locks may be arranged to keep the pressure in the heating zone at the desired value. Especially, the pressurizer is configured to maintain the liquid within the duct (over at least a part of the duct defined by the heating zone and an optional holding zone, see below) at a pressure of over 1 bara, especially at a (treatment) pressure described above (during operation of the process). Hence, in an embodiment, the pressurizer is configured to maintain the liquid within the duct, especially within the heating zone and the optional holding zone at a pressure selected from the range of 1.5-6 bar, especially 2-5 bar. Therefore, the method of the invention may further comprise maintaining the liquid within the duct (at least at the heating zone and the optional holding zone (when present)) at a pressure of over 1 bar, especially at a pressure selected from the range of 1.5-6 bar, especially 2-5 bar. Herein the term "bar" especially relates to the absolute pressure in bars, also indicated as "bara".

The apparatus essentially comprises the RF heating zone comprising (at least) the main electrode and the (first) counter electrode. In further embodiments, the system further comprises a further counter electrode (also) configured to be coupled to (or in embodiments being coupled to) an RF generator, such as the RF generator described above, for generating during operation a further electric field in the duct (between the main electrode and the further counter electrode) especially parallel to the duct axis. The further counter electrode and the first counter electrode are especially (mutually) arranged at opposite sides of the main electrode. As such, the RF zone may extend to both directions of the main electrode (upstream and downstream). Because of this configuration, a direction of the further electric field and a direction of the (first) electric field are especially configured opposite to each other. In embodiments, both electric fields are directed towards the main electrode. In further embodiments, both electric fields are directed away from the main electrode (during operation). The electric field lines in both electric field may especially be parallel to each other.

Hence, in embodiments, the RF heating zone comprises a further counter electrode, wherein the further counter electrode and the first counter electrode are arranged at opposite sides of the main electrode, wherein the further counter electrode is configured for functionally coupling to the RF generator to generate during operation a further electric field in the duct between the main electrode and the further counter electrode, wherein a direction of the further electric field and a direction of the (first) electric field are configured opposite to each other.

Herein, the term "the electric field" may relate to the (first) electric field (alone) as well as to the (first) electric field and the further electric field. Especially, in embodiments comprising only the first electric field, only the term "electric field" may be applied. Furthermore, if it may be referred herein to an electric field in general, such as the electric field in the RF zone / in the duct, etc., e.g., independently of a direction of the field, and/or if it is not relevant whether one or two counter electrodes are present, for instance with respect to the cartridge (per se), then also the term "electric field" may be used in relation to (only) the first electric field as well as in relation to the first and the further electric field.

The term "counter electrode" may (thus) relate to a plurality, especially two, (different) counter electrodes. Hence, the term may refer to the first counter electrode (alone) and/or to the further counter electrode (alone). The tenn especially refers to (the combination of) all counter electrodes comprised by the system. Essentially, the first counter electrode and the further counter electrode (when present in the system) are configured at a non-zero distance from the main electrode. The (first) counter electrode may be configured at a (first) inter-electrode distance from the main electrode, especially defined as a shortest distance between the respective electrodes. Likewise, the further counter electrode may be configured at a second inter-electrode distance from the main electrode, especially wherein a shortest distance between said electrodes defines the second inter-electrode distance. The first inter-electrode distance and the second inter-electrode distance may be configured having substantially the same length. Yet, in specific embodiments, the (first and second) inter-electrode distances may have a different length. In embodiments, a ratio of the first inter-electrode distance to the second inter-electrode distance is selected from the ranges of 20:80 - 80:20, such as from the range of 40:60 - 60:40, especially from the range of 45:55 - 55:45. The phrase "the first inter-electrode distance and the second inter-electrode distance may be configured having substantially the same length" and comparable phrases may especially refer to the ratio of the first inter-electrode distance to the second electrode distance being in the range of 40:60 to 60:40, especially in the range of 45:55 to 55:45 (or being about 50:50).

Hence, in an embodiment, a shortest distance between the main electrode and the first counter electrode defines a first inter-electrode distance, a shortest distance between the main electrode and the further counter electrode defines a second inter-electrode distance, a ratio of the first inter-electrode distance to the second electrode distance is selected from the ranges of 20:80 - 80:20, especially from the range of 45:55 - 55:45, such as being substantially 1. The product is essentially heated in the RF heating zone when being transported from an upstream side of the RF heating zone to a downstream side of the heating zone (during transporting the product). During heating the product, the conductivity of the product may increase. The system may be configured for providing about the same amount of RF energy to the product by the first electric field as by the further electric field.

The apparatus comprises the main electrode, surrounding at least part of the duct space, such as at least 180°, especially at least 270°, or even substantially 360°. During operation, the main electrode may contact the liquid and may surround the liquid over at least at least 180°, especially at least 270°, or even substantially 360°. Furthermore, (also) the counter electrode(s) essentially surround(s) the duct space over at least 180°, especially at least 270°, or even substantially 360°, and especially during operations may contact the liquid.

The wall of the duct especially comprises the main electrode and one or more of the counter electrodes (especially in the RF heating zone). The electrodes may be embedded in the duct wall. A side of the wall facing the duct axis especially comprises a smooth surface. The surface, e.g., does not comprise protrusions or irregularities extending from the surface. In embodiments, a side of the (main and counter) electrode facing the duct axis does not extend beyond the remainder of the side of the wall facing the duct axis (and vice versa). Hence, a shortest distance between the main electrode and the duct axis especially equals the shortest distance between the wall and the duct axis. Especially, also a shortest distance between the (first and/or further) counter electrode and the duct axis equals the shortest distance between the wall and the duct axis. The shortest distance between the electrodes and the duct axis (and the wall and the duct axis) may therefore especially define an electrode-to-axis distance.

The electrodes may thus surround the duct space (at the position of the electrode). The main electrode and the counter electrode(s) may (like the duct) have a square, rectangular, circular, oval, elliptical, etc. shape (when seen in a cross-sectional view). In specific embodiments, the electrodes comprise a cylindrical shape. The electrodes are used to create the RF field, and the electrodes are especially configured to substantially confine the RF field within the duct (and between the electrodes). The electrodes are especially configured to (physically) contact the liquid when being held in the duct.

Hence, the electrodes may be configured for coupling to one or more RF generators. The electrodes may especially be coupled to one or more RF generators. The RF generator may be coupled to (couplable to) the electrodes in many ways. The electrodes may, e.g., comprise one or more connection locations and/or terminals to (conductively) connect to the RF generator. Connecting may be established e.g. by nuts and bolts or by other electrical connection systems known in the art, such as by a male-female connection system. In further embodiments, a conducting element coupled to (or of) the RF generator may be welded to the electrode(s) (at a connection location) to provide the conductive connection.

The RF generator may in specific embodiments be connectable or connected to one or more of the electrodes at more than one connection location of the (respective) electrode. One or more of the electrodes (main electrode and/or counter electrode(s)) may comprise a plurality, such as two, connection locations (per electrode). In embodiments, the main electrode is configured to be connected to the RF generator (or is connected to the RF generator) at two (or more) (connection) locations (and/or connection terminals) of the main electrode. In further embodiments, (also) the counter electrode(s) is/are configured to be connected to the RF generator (or is/are connected to the RF generator) at more than one connection location (and/or connection terminal) of the (respective) counter electrode. Experimentally it was observed that connecting the RF generator to the electrodes, especially to the main electrode, at more than one connection location could improve the homogeneity of the RF (electric) field (and therewith the temperature) over the (inner) cross-sectional area of the duct in the RF heating zone in specific embodiments.

In embodiments, the connection locations (connection terminals) are substantially evenly distributed over a perimeter of the electrode. In specific embodiments, one or more of the electrodes comprises two connection locations, wherein the connection locations are arranged (mutually) at opposite sides of the duct axis. A straight line comprising the two connection locations may in embodiments (almost) intersect the duct axis. In embodiments, the more than one connection locations (of a respective electrode) may especially be arranged substantially rotational symmetrically around the duct axis. Connection locations of embodiments of an electrode comprising (a number of) n connection locations may e.g. have a rotational symmetry of order n with respect to the duct axis. In specific embodiments, e.g., the main electrode comprises two connection locations (or is connected to the RF generator at two connection locations) and especially the two connection locations are arranged substantially rotational symmetric at the main electrode over 180° with respect to the duct axis. In further embodiments, one or more of the electrodes comprises three, four, five, (or more), especially n, connection locations, and the connection locations, especially the electrode, are (especially is) configured substantially symmetric over respectively 120°, 90°, 72°, especially 360°/n with respect to the duct axis. It will be understood that the connection locations may be arranged with some deviation of such symmetry, e.g. of less than 25% of the depicted rotational angles. Hence, at an embodiment of an electrode comprising two connection points, the first connection point may be arranged at 0°, and a second connection point may in embodiments be arranged at 180° ± 45° relative to the duct axis.

In yet further specific embodiments, the system comprises a conductive diversion element arranged encompassing the main electrode, especially over substantially 360°. The (conductive) diversion element is especially connected (or connectable) to the RF generator at a first location of the (conductive) diversion element and connected (or connectable) to the main electrode at a second location of the diversion element. The diversion element may especially be configured coaxially with the duct axis, especially coaxially with the main electrode (axis), especially at a non-zero distance of the main electrode (except for the first location) (at a distance that is smaller than the shield-to-axis distance, see below). Furthermore, a shape of the diversion element may especially correspond to the shape of the duct (and especially of the main electrode). The diversion element may for instance comprise a conducting (circular) ring (or strip), wherein the duct, especially wherein the main electrode, is cylindrical. Likewise, the diversion element may have a square shape (outer surface), when the main electrode has a square shape, etc.. The diversion element is especially made of a conductive metal.

In specific embodiments, the first location and the second location of the diversion element are configured opposite to each other. In specific embodiments, a straight line comprising the first and the second location of the diversion element may (almost) intersect the duct axis. As such, a first conductive path for (RF) power provided to the first location (of the diversion element) alongside of a first side of the duct to the second location (of the diversion element) is about as long as a second conductive path for the (RF) power provided to the first location (of the diversion element) alongside another (opposite) side of the duct to the second location of the diversion element. Also for such configuration (comprising the conductive diversion element) it experimentally appeared that in specific embodiments, the homogeneity of the RF (electric) field (and therewith the temperature) over the (inner) cross-sectional area of the duct in the RF heating zone may further be improved (become more homogeneous). The term "(conductive) diversion element" may relate to more than one (different) conductive diversion elements.

It is hypothesized that the configuration of conducting elements between the RF generator and the main electrode may affect an electric field external from the duct (but especially within a shield or mantle enclosing the duct, see further below). It is further hypothesized that homogeneity of the electric field inside the duct may in its turn be affected by the external field. In specific embodiment, (therefore) conducting elements for (functionally) connecting the RF generator and the main electrode (at locations external from the duct, and especially within the shield) are configured symmetrically with respect to the duct axis (especially with respect to the main electrode).

Hence, in embodiments, the system is configured for connecting the RF generator to the (main) electrode at a plurality of locations of the (main) electrode. In further embodiments, the RF generator may be connected via the conductive diversion element (arranged encompassing the main electrode) to the main electrode at a single location (the second location), especially wherein the RF generator is connected to the conductive diversion element at the first location of the conductive diversion element, the first location being opposite to the second location.

A further aspect of the system (and the method) is the arrangement of the main electrode, the counter electrode(s), and the field-guiding element. During heat-treating a product, at least one field-guiding element may be arranged (transported in the duct) between the counter electrode(s) and the main electrode. The field-guiding element may essentially guide the electric field through the field-guiding element and (successively) in a direction parallel to the duct axis (see further below). Because of the configuration of the system (especially the configuration of the main electrode and the counter electrode(s) with the field-guiding element arranged in between (in the duct), the energy may efficiently be applied to heat-treat the products (within the heating zone) and especially the RF field may be substantially homogeneously distributed in the duct between the main electrode and one or more of the counter electrode(s), especially (homogeneously) over the (inner) cross-sectional area ("cross section") of the duct.

The electric field guiding element is especially configured for guiding the electric field homogeneously over the cross section of the duct in the RF heating zone.

The field-guiding element may thus function as a further electrode, especially as a floating electrode and may distribute the RF field over the cross-sectional area of the duct. Furthermore, the field-guiding element may (locally, especially at a position of one of the electrodes) guide a part of the electric field emanated from one of the electrodes away from the wall in a direction of the duct axis (and/or vice versa from the duct axis in a direction of the electrode). To direct the electric field, the field-guiding element essentially comprises an electrically conductive material. The field-guiding element may in embodiments comprise a solid (conductive) body. Yet, in further embodiments, the field-guiding element may comprise through holes (through the body). The field-guiding element may further comprise a hollow body, especially having a cavity or a hollow space. The field-guiding element may e.g. comprise two plate like-elements (sides, see below) being connected to each other by a wall or spacers. In yet further embodiments, the body of the field-guiding element may be defined by a (3D) mesh, grit, or screen. The field-guiding element does not need to contact the electrodes for its (floating electrode) function. The field-guiding element is especially configured to be electrically insulated from the electrodes during transport through the duct. The field-guiding element may therefore (further) comprise electrically insulating material, for contacting the wall during transport through the duct.

The field-guiding element may be defined by a (maximum) height (in a first direction), a (maximum) width (in a second direction perpendicular to the first direction), and a (maximum) thickness (in a third direction, wherein the third direction is perpendicular to the first direction and to the second direction, especially wherein the third direction is arranged parallel to the duct axis (during operation). Hence, the thickness of the field-guiding element (during operation) is especially configured parallel to the direction of propagation. The width and the height of the field-guiding element are especially configured in a plane perpendicular to the duct axis during operation (and parallel to a cross-sectional area of the duct). Furthermore, the field-guiding element may have a field-guiding element axis configured parallel to the third direction. Therefore, the field-guiding element may be configured for arranging the field-guiding element axis parallel to the duct axis during transport (of the field-guiding element) through the duct. During transport, the field-guiding element axis may especially be parallel to the direction of propagation. Furthermore, the field-guiding element may comprise a first side of the field-guiding element and a second side of the field-guiding element, especially spaced from each other along the field-guiding element axis. The planes of the (first and second) sides of the field-guiding element may be configured parallel to each other and may define the thickness of the field-guiding element. The (first and/or second) side of the field-guiding element may in embodiments (further) comprise a protrusion (such as at least part of a field-incoupling element, see further below) extending from the body especially from the plane of the respective side of the field-guiding element. As such, the thickness of the field-guiding element may in embodiments include (a length of) one or more protrusions extending from the body of the field-guiding. The thickness may especially be defined by a minimum distance between two planes configured parallel to the (planes of the) sides of the field-guiding element, together enclosing the field guiding element including any protrusion (present) extending from (the plane of) the first and (the plane of) the second side (of the field-guiding element). The thickness (of the field-guiding element) may thus comprise the thickness of the body plus the extension provided by the protrusions.

Preferably the thickness of the field-guiding element is relatively small compared the height and the width, as such requiring (only) a minimum volume between consecutive packages. The field-guiding element may especially comprise an essentially plate like shape that may be arranged between the products. Furthermore, the (maximum) height and/or the (maximum) width are especially at least twice as large as the thickness, even more especially 10 times as large as the thickness of the field-guiding element. Hence, in an embodiment, the electric field guiding element comprises a (maximum) height, a (maximum) width, and a (maximum) thickness, wherein the thickness is configured to be arranged parallel to the duct axis during transport through the duct, especially wherein a ratio of the height to the thickness (of the field-guiding element) is larger than 2, especially larger than 5, and especially wherein a ratio of the width relative to the thickness is larger than 2, especially larger than 5. In embodiments, the ratios (height over thickness and with over thickness) may be equal to or less than 100, especially equal to or less than 25, such as equal to or less than 10. Furthermore, the thickness of the field-guiding element may especially be selected from the range of 2-100 mm, such as 5-80 mm, especially 25-70 mm. The thickness especially includes any protrusions extending from the first and/or second side of the field-guiding element (see also above). In embodiments, the protrusions may e.g. extend 5-15 mm from a side of the field-guiding element. In embodiments, the thickness of the body of the field-guiding element may be 25-50 mm. In embodiments, the field-guiding element may comprise a substantially solid disk with a thickness of 35-75 mm. Yet in other embodiments, the field-guiding element has a thickness of 35-75 mm and especially comprises a hollow space.

The width and the height (of the field-guiding element) are further limited to the (inner) cross-sectional area of the duct (during transport through the duct). Preferably, during transport through the duct, the field-guiding element covers at least 50%, such as al least 60%, even more especially at least 75%, such as at least 90%, especially at least 95% of the inner cross-sectional area of the duct. Furthermore, preferably, (a shape of) a cross-section of the field-guiding element defined by the width and the height of field-guiding element matches (a shape of) the cross-section of the duct. For instance, if the cross-section of the duct is square, rectangular, circular, oval, elliptical, etcetera, the cross-section of the field-guiding element may also be square, rectangular, circular, oval, elliptical, etcetera, respectively.

The field-guiding element is especially configured for preventing a physical contact between (the electrically conducting material of) the body of the field-guiding element and the wall of the duct when being transported through the duct. In further embodiments, a clearance between the wall of the duct and body of the field-guiding element, especially the electrically conductive material of the field-guiding element, during transport through the duct is selected from the range of 1-20 mm, such as 2-10 mm. To prevent a contact between the electrodes (and/or wall) and the body, especially the electrically conductive material (of the field-guiding element), the field-guiding element may in embodiments comprise an alignment element (especially not being part of the body of the field-guiding element). The alignment element may comprise (consist of) electrically insulating material (such as described herein in relation to the wall and the package). The alignment element is essentially configured for providing alignment of the axis of the field-guiding element with the duct axis during operation. Hence, the alignment element may provide centering of the field-guiding element (in the duct). As such, the alignment element especially extends away from the body of the field-guiding element. The alignment element may be configured at a perimeter of (the body of) the field-guiding element. The alignment element may comprise a resilient and/or flexible material or element. The alignment element may comprise a single element. Yet in embodiments, the alignment element may comprise a combination of alignment components. The alignment element may e.g. comprise resilient (insulating) material configured along the entire perimeter, especially configured for contacting the wall during operation. Yet alternatively, portions of said resilient material may be distributed over the perimeter.

In specific embodiments, the alignment element comprises a plurality of (electrically insulating) spacer elements. The spacer elements are especially configured for contacting the wall during operation (and aligning the field-guiding element axis with the duct axis). The spacer elements may also be characterized as sliding elements. The spacer elements may be (evenly) distributed along the perimeter of the field-guiding element and especially extent from the body of the field-guiding element. The field-guiding element may e.g. comprise three spacer elements configured rotationally about 120 ° (around the field-guiding axis) from each other, or four spacer elements configured rotationally 90 ° from each other. The number of spacer elements is at least two. The number may especially be 100, such as 40, especially 10, even more especially 8, at maximum. A spacer element may be configured to extend away from the axis of the field-guiding element (and away from the body, especially from the electrically conductive material). The spacer element may further be configured to be movable in a direction towards the field-guiding element axis by an external force The spacer element may, e.g., comprise a spring element forcing the spacer element in a direction away from the field-guiding element axis when being arranged outside the duct, and especially wherein the spacer element is moved (back) towards the field-guiding element axis when the field-guiding element is arranged in the duct. As such, the spacer elements may align (center) the field-guiding element during operation (transport through the duct). The spacer elements may also be characterized as sliding elements (configured for sliding/contacting the wall).

It will be understood that if the field-guiding element is coupled to a further element, such as a to a product receiver (in the cartridge) (see further below), additionally or alternatively, elements of such further element may provide the centering of the field-guiding element (in the duct). Hence, in further embodiments, such further element (e.g. the product receiver), (and/or the cartridge) may (also) comprise the alignment element (for providing the centering of the field-guiding element). The further element (and/or the cartridge) may e.g. comprise the alignment element, especially the plurality of spacer elements. In embodiments, the cartridge comprises the (plurality of) spacer elements, especially distributed along a perimeter of the cartridge. Hence, in embodiments, the cartridge comprises the alignment element, especially for aligning the cartridge axis with the duct axis.

The term "perimeter" in the phrases "perimeter of (the body of) the field-guiding element" and "perimeter of the cartridge", and the like especially relates to a perimeter along an edge (of the body) of the field-guiding element and/or cartridge and the like configured for facing the wall during operation.

In a further embodiment, the body of field-guiding element comprises a substantially circular cross-section with a diameter, wherein the diameter equals the width (and the diameter equals the height). Especially, the diameter is selected to be less than 2 times the electrode-to-axis distance, and especially at least 1-1.5 times the electrode-to-axis distance (for cylindrically shaped ducts and electrodes). The total cross-section of the field-guiding element may be different from the cross-section of the body of the field-guiding element. The cross-section of body may not include any protrusions, such as (spacer elements) from the alignment element, extending away from the field-guiding element axis. The cross-section of the field-guiding element may include the spacer elements. Hence, the cross-section of the field-guiding element outside the duct may differ from the one during operation.

In embodiments, a ratio of a (maximum) cross-sectional area (of the body) of the field-guiding element (which is configured to be arranged perpendicular to the duct axis during transport through the duct) relative to an inner cross-sectional area of the duct (configured perpendicular to the duct axis) is selected to be at least 0.5 and to be smaller than 1; especially the ratio is selected in the range from 0.8-0.99. Likewise, in embodiments, the ratio of the maximum cross-sectional area (perpendicular to the cartridge axis, see below) of the cartridge (during operation, especially during transport through the duct) to an inner cross-sectional area of the duct is selected to be equal to or smaller than 1 and at least 0.5, especially at least 0.8. During operation, at least part of the perimeter of the cartridge contacts the wall of the duct, such as by the alignment element and/or spacer elements (while being able to move). Hence, part of the inner cross-sectional area of the cartridge and inner cross-sectional area of the duct may be substantially the same during operations. Because an alignment element may be resilient and may extend from the cartridge, the cross-sectional are of the cartridge may be larger than the inner cross-sectional area of the duct, when being arranged outside the duct.

In further embodiments, the system comprises the cartridge, especially comprising (at least one) field-guiding element and a product receiver for hosting the product during transport through the duct. The product receiver may comprise an electrically insulating material, e.g., such as described above in relation with the duct and the package, and especially further comprises a cavity for hosting the product. Preferably, the field-guiding element and the product receiver are arranged at a minimal mutual distance from each other (in the cartridge). Moreover, in embodiments, at least part of the product receiver and the field-guiding element overlap, especially interlock (see below). The field-guiding element and the product receiver are especially arranged in line during operations (during transport through the duct). As such, the product receiver is arranged (during operation) downstream from the field-guiding element, or the field-guiding element is arranged downstream from the product receiver (in a cartridge comprising one field-guiding element and one product receiver.

Hence, in a further embodiment, the product transport system comprises a cartridge for transporting the product through the duct, wherein the cartridge comprises an assembly of (i) the electric field guiding element and (ii) a product receiver comprising a cavity configured to host the product, especially wherein the product receiver comprises an electrically insulating material. The cartridge especially comprises a cartridge (central) axis configured to be arranged parallel to the duct axis (of the duct) during transport (of the cartridge) through the duct. Especially, the electric field guiding element and the product receiver are configured adjacent to each other along the cartridge (central) axis. Hence, the invention also provides the cartridge *per se.*

In further embodiments, the cartridge comprises a plurality of product receivers and especially (only) one field-guiding element. In further embodiments, the cartridge comprises a plurality, such as two, three, four, etc. field-guiding elements and one or e.g. a plurality of product receivers. The sequence of the product receiver(s) and the field-guiding element(s) may be randomly selected in the cartridge. Yet, is specific embodiments, the product receiver(s) and the field-guiding element are alternately arranged in the cartridge.

The (adjacently arranged) electric field guiding element and product receiver are especially connected to each other (in the cartridge). In embodiments, the electric filed guiding element is configured for connecting to the (especially to two) product receiver(s) and especially the product receiver is configured for connecting to the (especially to two) field guiding element(s).

Hence, in embodiments, the product transport system is configured to transport the cartridge through the duct. The product receiver further comprises a product receiver axis of the product receiver (configured for arranging parallel, especially in line, to the cartridge axis). The product receiver further comprises a first end of the product receiver and a second end of the product receiver defining a (maximum) thickness of the product receiver along the product receiver axis. The product receiver further comprises a width and a height of the product receiver. The width, the height, and the thickness of the product receiver are all arranged perpendicular to each other. In specific embodiments, the product receiver is circular and comprises a diameter, especially having the same size as the height and the width (i.e., the height equals the width). The product receiver further comprises an outer surface of the product receiver, i.e. a side surface of the product receiver configured for facing the wall of the duct during operation. Herein, also the term "length" may be used referring to the term "thickness" in relation to the field-guiding element and/or of the product receiver.

In further embodiments, the cartridge comprises a plurality of field-guiding elements and/or a plurality of product receivers, especially wherein alternately one field-guiding element and one product receiver are configured adjacent (and especially connected) to each other along the cartridge axis. As such, the field-guiding element especially contacts the adjacent product receiver(s). Hence, the cartridge essentially may comprise repeating cartridge units, especially comprising (a combination of) one field-guiding element and one product receiver element. A field-guiding element may especially be configured for closing the cavity in an adjacently configured product receiver (at one side). In embodiments, especially two field-guiding elements are configured enclosing the product receiver; hence, the two field-guiding elements together may close the cavity of the (enclosed) product receiver (both at another side).

In specific embodiments, a total number of electric field guiding elements (in the cartridge) equals a total number of product receivers plus one. The cartridge may comprise a first field-guiding element at a first end (extreme) of the cartridge (along the cartridge axis), and especially a second field-guiding element at a second end (extreme) of the cartridge. Hence, in embodiments, two field-guiding elements may enclose the remainder of the cartridge. In a specific embodiment, the cartridge comprises two electric field guiding elements enclosing one product receiver. Hence, the field-guiding element may comprise (function as) a closure for a cavity of the product receiver. Yet in other embodiments, another type of closure may be configured to close the cavity of the product receiver. Hence, in further embodiments, only one field-guiding element is configured at one of the ends of the cartridge. Alternatively, no field-guiding elements are configured at the ends of the cartridge (but e.g. other type of closures).

As described above, during operations, preferably the liquid surrounds the product in the cavity. In embodiments, the cartridge especially comprises one or more liquid channels configured (to provide a fluid connection) from a first end of the cartridge to a second end of the cartridge. The liquid channel(s) is/are especially configured to provide a fluid connection between the one or more cavities (in the cartridge) and an external of the cartridge, especially with liquid in (the remainder of) the duct and/or with liquid provided to the duct (see below). In further embodiments, the field-guiding element defines or comprises at least part of the one or more liquid channels.

In specific embodiments, the system is configured for arranging at least one field-guiding element of a plurality of field-guiding elements (configured (simultaneously) in the RF heating zone) to be enclosed (surrounded) by the main electrode. In further embodiments, at least two field-guiding elements may be enclosed (surrounded) at the same time by the main electrode. Such plurality of field-guiding elements may e.g. relate to the field-guiding elements of a cartridge. Yet, they may also relate to a plurality of field-guiding elements in a combination of sequentially arranged field-guiding elements and products (in the RF zone).

Herein the terms "surround" and "enclose" such as in the phrase the (main) electrode surrounds the field-guiding element, especially relate to a condition wherein a plane of the (main) electrode (perpendicular to the duct axis) may intersect the field-guiding element. Hence, the electrode not necessarily completely surrounds the field-guiding element.

Hence, in further embodiments, especially wherein the cartridge comprises a plurality of electric field guiding elements, a length of the main electrode in a direction parallel to the duct axis is equal to or longer than a shortest distance between two (consecutive) neighboring electric field guiding elements. Herein, the term "neighboring electric field guiding elements" especially relates to two electric field guiding elements that together enclose a product, such as a product in a product receiver (while not enclosing a further field-guiding element).

In further embodiments (also) a length of one or more of the counter electrodes in a direction parallel to the duct axis is equal to or longer than the shortest distance between two (consecutive) neighboring electric field guiding elements.

It may further be advantageous to simultaneously have all electrodes surround (or enclose) at least one field-guiding element at a specific moment. Hence, in further embodiments, the heat treatment system is configured for providing a first configuration wherein each of the electrodes surrounding (at least) one electric field guiding element during transport of the cartridge through the duct.

A such, the system and/or the cartridge may be configured such that (in the first configuration) during transport through the duct, a first number of product receivers may be arranged in the duct between the first counter electrode and the main electrode, and a further number of product receivers may be arranged between the main electrode and the further counter electrode, especially wherein each of the electrodes at least surround one field-guiding element. In embodiments, e.g., exactly one product receiver is arranged (in the duct) between the main electrode and the first counter electrode and exactly one product receiver is arranged (in the duct) between the main electrode and the further counter electrode (in the first configuration). Hence, said first number and said further number (of product receivers) may both be the same, and e.g. be 1, 2, 3, etc., e.g., if the first and second inter-electrode distance are equal in length. Yet, in further embodiments, the first number and the further number may not be the same. Especially, the first number and the further number are independently from each other selected from the range of 1-20, especially 1-10. In embodiments, the difference between the first number and the further number (of product receivers) is at least one, such as at least two, or at least three. In an embodiment, e.g., three product receivers may be arranged between the main electrode and the further electrode and two product receivers may be arranged between the main electrode and the first counter electrode, especially wherein each electrode surrounds a field-guiding element (the first configuration). Yet, in alternative embodiments, two product receivers may be arranged between the main electrode and the further electrode and three product receivers may be arranged between the main electrode and the first counter electrode, especially in the first configuration.

Hence, in an embodiment, the first counter electrode and the main electrode enclose the first number of product receivers (over the first inter-electrode distance) (especially in the first configuration), the main electrode and the further counter electrode enclose the further number of product receivers, the first number (of product receivers) is selected from the range of 1-10, and the further number (of product receivers) is selected from the range of 1-10, especially wherein a difference between the first number and the further number is equal to or smaller than 3. In specific embodiments, the difference between the first number and the further number (of product receivers) is equal to 0.

The system, especially the transport system, may further comprise a transport unit, configured to transport the (packaged food) product and the field-guiding element (comprised by the cartridge) in a propagation direction through the duct. The transport unit can be any unit that is suitable to transport the product(s), especially in the product receiver, even more especially in the cartridge through the duct. As will be clear to the person skilled in the art, in certain embodiments the transport unit may be configured for a continuous transport of the product through the duct, especially in a continuous motion through the heating zone. In further embodiments the transport unit may be configured for transporting the food product into the RF heating zone, and successively (motionless) maintaining the product in the heating zone, and finally transporting the product out of the heating zone, and/or duct.

Additionally or alternatively, the transport unit may be configured for step-wise or step-by-step transporting the package and the field-guiding element (or the cartridge) through the duct in the propagation direction (see also above). The field-guiding element(s) and/or the cartridge may e.g. be transported and arranged at a determined position, and successively maintained at that position for a determined period, and next be transported again (in the propagation direction). Optionally, this process (of transporting and successively maintaining) may be repeated thereby providing the step-by-step transport through the duct. As such, e.g., the cartridge may be transported step-by-step over a (discrete) step length per step. Advantageously, the step length may be selected to be equal to a total length of a repeating cartridge unit (comprising one field-guiding element and one product receiver). In an embodiment, e.g., in every step a consecutive field-guiding element of the cartridge may be positioned at the same determined position. For instance, in every step a consecutive field-guiding element may be arranged in a plane of one of the electrodes. This way the RF field may especially homogeneously be distributed of the cross-section of the duct in the RF zone. Hence, in specific embodiments, the method comprises transporting the cartridge step-by-step over a step length through the duct, wherein the step length equals a total length of the repeating cartridge unit.

The term "consecutive" as in the phrase "consecutive field-guiding elements", and the like, especially relates to adjacently (neighboring) arranged elements optionally having another element arranged in between, and especially not having a same element arranged in between two consecutive (same) elements. Hence, consecutive field-guiding elements may refer to field guiding elements of (two) (adjacently arranged) repeating cartridge units, i.e. repeating cartridge units that may directly contact each other. The repeating cartridge units especially are connected to each other.

The heating process may have been improved in embodiments by configuring the floating electrode to match a shape of the product, especially of the packaged food product. The packaged food product may comprise a tray comprising the sloped brick-like shape, having a sloped or slanted wall. For such embodiment, it may be advantageous to provide the electric field more or less homogeneously to the sloped wall, especially with a direction perpendicular to the (sloped) wall of the (packaged food) product where the field is coupled in.

For supporting this type of incoupling, the electric field guiding element may comprise a field-incoupling element. The field incoupling element, especially being configured to deflect at least part of the (first) electric field towards the product during transport of the product through the RF heating zone and/or to deflect at least part of the further electric field towards the product during transport of the product through the RF heating zone. The field-incoupling element may be configured to extend/protrude from the body of the field-guiding element in a direction parallel to the duct axis during transport through the duct, especially in a direction towards the product in a cavity of an adjacent product receiver in the cartridge. The field-incoupling element is especially configured to match a shape of the product facing the field-guiding element. The field-incoupling element may thus be arranged in the adjacent product receiver. The field-incoupling element may also be referred to as deflective element.

Hence, the thickness of the field-guiding element may include a length of the field-incoupling element extending from the body of the field-guiding element. Furthermore, in embodiments, the total length of the repeating cartridge unit may be smaller than a total of the thickness of the product receiver and the thickness of the field-guiding element.

The liquid within the duct may be stationary, but the liquid may also flow through the duct. The liquid may flow in the direction of propagation (of the product during transport), especially at a determined location in the duct. Yet, the liquid may flow in an opposite direction at a further determined location in the duct. To allow liquid to flow in different directions in the duct, one or more liquid ports may have been configured in the wall of the duct, especially configured for providing liquid to the duct and/or for withdrawing liquid from the duct at a position of the respective liquid port.

The system, especially (the duct of) the apparatus of the invention may comprise a plurality of different adjacently configured regions or zones, such as a feeding zone (for feeding or receiving the product to be treated), a holding zone (for maintain a temperature of the product at a constant value, especially at the heating temperature), a cooling zone (for cooling the product after the heat treatment), and an extraction zone (for extracting the product from the duct). Because different temperatures may be desired in the different zones, it may be advantageous not to have the same liquid flow direction in all of the zones. Furthermore by providing liquid to the duct at a specific liquid port (and extracting liquid from an further liquid port) not only a direction of the liquid flow between the ports may be controlled, but also a temperature of the liquid between the ports may (at least partly) be controlled by selecting a temperature of the liquid provided to the duct (via the respective liquid port).

Hence, in a further embodiment, the duct further comprises an arrangement of zones, especially comprising a feeding zone configured upstream of the RF heating zone, and especially a holding zone configured downstream of the RF heating zone, especially a cooling zone configured downstream of the holding zone, and especially an extraction zone configured downstream of the cooling zone. The duct may further comprise one or more liquid ports configured in one or more of the zones (of the arrangement of zones) selected from the feeding zone, the RF heating zone, the holding zone, the cooling zone, and the extraction zone for providing liquid to the duct and/or for extracting liquid from the duct. Moreover, the heat treatment system may further be configured for providing a flow direction of the liquid in the duct in a first zone of the respective zones, independently from the flow direction of the liquid in another zone of the respective zones by providing liquid to the duct and/or extracting liquid from the duct via one or more of the liquid ports.

In a further specific embodiment, the cartridge is configured for receiving liquid (in the liquid channel) provided to a liquid port and/or for providing liquid from the liquid channel to a liquid port. The cartridge may e.g. comprise an opening, especially at an edge or circumference of the cartridge, in fluid contact with the liquid channels, and configured for providing a fluid connection with a liquid port (during transporting). Hence, the cartridge may especially be configured for arranging (the opening of) the cartridge in fluid connection with one or more of the liquid ports during transport of the cartridge through the duct. In specific embodiments, (at least) the field-guiding element comprises the opening. In embodiments, liquid may be provided to the opening and especially be further distributed (directed) in the cartridge. Hence, in embodiments, the field-guiding element defines at least a part of the liquid channel.

In further embodiments, the cartridge, especially the product receiver comprises a sealing element configured at the perimeter of the cartridge (of the product receiver). The sealing element may be configured for surrounding substantially the complete perimeter of cartridge (of the product receiver). The sealing element is especially configured for preventing/blocking (or minimizing) a liquid flow between the wall of the duct and the sealing element. The sealing element is especially configured for preventing/blocking or minimize a (axial) liquid flow along the outer surface of the cartridge from the first end to the second end of the cartridge, especially to block/prevent or minimize the flow along the outer surface of the product receiver from the first end to the second end of the product receiver. Hence, the cartridge may be configured for providing the liquid to flow (only) from the first end of the product receiver to the second end of the product receiver (or vice versa) via the liquid channel in the product receiver, and especially along the product hosted in the cavity of the product receiver. The sealing element may further be configured to provide a non-obstructed transporting of the product receiver, especially of the cartridge, in (through) the duct. The sealing element especially extends from the outer surface of the cartridge, especially of the product receiver.

Hence, in embodiments, the cartridge is configured for receiving liquid provided to the liquid port and (successively) directing the liquid through the liquid channel and through one or more of the cavities in cartridge, especially along one or more (of the) products hosted by the cartridge. In embodiments, liquid is forced in the duct via a liquid port into an opening of the cartridge and (successively) directed through the liquid channel along the product hosted in the cavity of the cartridge.

In specific embodiments, the sealing element comprises (at least part of) the alignment element. Hence, the cartridge may comprise one or more of the sealing element and the alignment element. In further specific embodiments, the cartridge comprises an alignment element (for aligning the cartridge axis with the duct axis) and a sealing element (configured for blocking a liquid flow along an outer surface of the cartridge from a first end of the cartridge to a second end of the cartridge) (during transport through the duct).

In further embodiments, the cartridge is configured for directing liquid provided via one or more of the liquid ports in the duct along the product hosted by the cartridge. In further embodiments, the cartridge comprises an opening (configured at an edge of the cartridge) configured for receiving (the) liquid provided via a (at least one of the) liquid port(s) (in the duct), especially wherein the opening is configured in fluid connection with the liquid channel.

The system may further comprise a Faraday cage for preventing radio frequent energy to be emitted from the system. Such cage may especially be arranged (entirely) encompassing the RF heating zone and may be indicated as a part for shielding the electrical field, a shield, or a mantle. The shield or mantle may e.g. be configured coaxially around the duct axis. However, such configuration may not be required. Essentially, the shield is configured to provide the RF energy efficiently to the product and to prevent RF energy to be emitted from the system. The shield is especially configured encompassing the RF heating zone. Hence, in embodiments, the system, especially the apparatus, (further) comprises a shield configured (coaxially to the duct axis) around the duct at the RF heating zone. In further embodiment, a shortest distance between the duct axis and the shield defines a shield-to-axis distance. Especially a ratio of the shield-to-axis distance to the electrode-to-axis distance is selected in the range of 2-10, especially 2-6. Said ratio is especially equal to or larger than 1.1, such as equal to or larger than 1.5, especially equal to or larger than 2 to substantially not affect (interfere with) the electric field inside the Faraday cage, especially in the heat treatment apparatus. Said ratio may in embodiments be larger than 6, such as equal to or smaller than 15, especially equal to or smaller than 10. Yet, large ratios may increase the size of the treatment system and may increase the total cost (while it may not improve the heat treatment). Hence, the ratio is in embodiments equal to or smaller than 6, such as equal to or smaller than 5.

It is noted that a cross-section of the shield (especially perpendicular to the duct axis) may not be bound to a specific shape. Furthermore, the cross-section of the shield and the cross-section of the duct (at the RF zone) not necessarily are similar in shape. The different cross-sections may e.g. independently from each other be square, rectangular, circular, oval, elliptical, etcetera. Especially, the cross-section of the shield (especially over the heating zone) is selected from the group consisting of circular, oval, elliptical, rectangular and square. In specific embodiments, the cross-section of the shield is selected to be square and especially the shield comprises a cuboid shape. In further embodiments, the shield comprises rounded corners.

Hence, in a specific embodiment, the duct comprises a wall comprising the electrodes, the electrically insulating material is configured between the electrodes, the shortest distance between the electrodes and the duct axis defines the electrode-to-axis distance, the electrodes are configured to physically contact the liquid when being held in the duct, and especially the electrodes enclose the liquid over at least 270°, such as substantially 360°, the apparatus especially further comprises a shield configured (coaxially to the duct axis) around the duct at the RF heating zone (especially (totally) encompassing the RF heating zone), wherein the shortest distance between the duct axis and the shield defines a shield-to-axis distance. Furthermore, the shield may be connected to earth. In further embodiments, (also) the counter electrode(s) is/are connected to earth.

During operations, especially when the electric field is generated in the duct, additionally an external electric field may be present inside the shield and outside the duct. Especially the external electric field is blocked for being emitted from the system by the shield. The external electric field may be affected/controlled by the configuration of the shield, such as by the shield-to-axis distance.

The system is essentially configured for functionally connecting the electrodes to a radio frequency (RF) (wave) generator (herein also referred to as "RF generator". In embodiments, the system comprises the RF generator. Of course, when there are more counter electrodes, the RF generator may be arranged to generate (during operation) the first RF field between the main electrode and the first counter electrode and to generate a further electric field between the main electrode and the further counter electrode. However, in case there are more counter electrodes, optionally each counter electrode may be driven by a separate radio frequency wave generator.

Optionally, the electrodes are coupled to the RF generator via an adjustable impedance matching circuit. Such impedance matching circuit may be applied to provide in the process (the ability) of optimizing the electrical energy input and output. The one or more of the frequency, the voltage and the impedance may be adjusted with the impedance matching circuit to optimize energy input in heating zone, especially in the (packaged food) products, and to minimize energy loss out of the thermal heating zone. In an embodiment, the impedance matching circuit may comprise a variable capacitor connected in series and a variable second capacitor connected in parallel to electrodes,

In a specific embodiment, the radio frequency (RF) wave generator (optionally in combination with the impedance matching circuit) is configured to generate RF-waves between main electrode and the counter electrode(s) at a frequency selected from the range of 10-50 MHz, especially 12-29 MHz. Further, the radio frequency (RF) wave generator may be configured to generate over main electrode and the counter electrode(s) an oscillating voltage in the range of 100-50,000 V (0.1-50 kV). Therefore, in the method of the invention the frequency (of the RF field) may be selected from the range of 12-29 MHz, especially 13.56 MHz or 27.12 MHz. The method may further comprise applying an oscillating voltage between the first electrode and the second electrode in the range of 100-50,000 V.

With respect to dimensions, in an embodiment the electrode-to-axis distance may be in the range of 10-500 mm, especially 15-250 mm, like 20-150 mm. Especially, when the electrode-to-axis distance is in the range of 10-100 mm, such as 15-100 mm, the radio frequency (RF) wave generator may be configured to generate RF-waves between the (main and the counter) electrodes at a frequency selected from the range of 25-29 MHz, especially 27.12 MHz. Especially, when the electrode-to-axis distance is larger than 100 mm, the radio frequency (RF) wave generator may be configured to generate RF-waves between the electrodes at a frequency selected from the range of 12-14 MHz.

Hence, in specific embodiments, the method comprises: transporting the product and an electrical field guiding element through an RF heating zone in a duct (of a heat treatment apparatus) along a duct axis of the duct, wherein the duct comprises a (pressurized) liquid, and generating an electric field in the duct between a main electrode and at least one counter electrode parallel to the duct axis, especially wherein the RF heating zone comprises the main electrode and the counter electrode (and optionally a further counter electrode), wherein the electric field guiding element comprises an electrically conductive material, and especially wherein the electric field guiding element is electrically isolated from the electrodes during transport through the duct.

In specific embodiments, the method comprises transporting the cartridge through the RF heating zone in the duct, along the duct axis, while generating the electric field in the duct between the main electrode and the at least one counter electrode parallel to the duct axis, wherein a cartridge (central) axis of the cartridge is arranged parallel to the duct axis, wherein the cartridge comprises an assembly of (i) the electric field guiding element and (ii) a product receiver comprising an electrically insulating material, wherein the product receiver comprises a cavity hosting the product and configured in fluid connection with the liquid in the duct, wherein the electric field guiding element and the product receiver are configured adjacent to each other along the duct axis.

Especially, the method further comprises providing a flow of the liquid in the duct wherein the flow comprises a flow direction, wherein the flow direction is independently selected from a direction of the transport of the product through the RF heating zone in the duct.

In further specific embodiments, the method comprises transporting the product and the field-guiding element from the feeding zone to the cooling zone along the duct axis (to transport the product and the field-guiding element through the RF heating zone in the duct).

Hence, in embodiments, the method comprises: (i) providing a heat treatment system described herein and (ii) transporting the product in the product receiver of a cartridge through the duct of the apparatus, while generating the electric field between the main electrode and the first counter electrode and optionally (simultaneously) generating the further electric field between the main electrode and the further counter electrode, especially wherein the product is heated to a heating temperature in the RF heating zone in the first period, successively a temperature of the product is maintained at the heating temperature during the second period in the holding zone, and sequentially the product is cooled to a further temperature in the cooling zone during a further period,

In embodiments, the method further comprises: providing a direction of a flow of the liquid in the duct, especially in the cartridge, in one or more of the respective zones by providing liquid to the duct and/or extracting liquid from the duct via one or more of the liquid ports, wherein the direction of the flow of the liquid in the duct in any of the respective zones is selected independently from the direction of the transport of the product through the duct. In embodiments, the liquid is directed via the liquid channel in the cartridge along the product hosted in the cavity. The opening in the cartridge is especially configured at an edge of the cartridge. The opening may provide a fluid connection between the liquid channel and the one or more of the liquid ports. A liquid flow along the outer surface of the cartridge may substantially be blocked by the sealing element.

Hence, optionally the direction of the flow of the liquid in one or more of the feeding zone, the RF extraction zone, the holding zone, the cooling zone and the extraction zone is controlled by providing liquid to one or more of the zones via one or more of the liquid ports, wherein liquid is extracted from the duct via another liquid port.

The method may especially comprise the step-by step method described herein. In embodiments, the method comprises a continuous transporting of the product through the duct.

The method of the invention may further comprise transporting the packaged food product through the duct filled with the (pressurized) liquid with a transport speed in the range of 0.1-10 cm/sec, such as 0.5-5 cm/sec. Hence, the transport unit may be configured to transport the packaged food product through the duct (filled with the pressurized liquid) with a transport speed in the range of 0.1-10 cm/sec, such as 0.5-5 cm/sec, especially during the moving of the products (in a step-wise method).

Herein, the system, apparatus, or device may execute an action in a "mode" or "operation mode" or "mode of operation". Likewise, in a method an action or stage, or step may be executed in a "mode" or "operation mode" or "mode of operation". The term "mode" may also be indicated as "controlling mode". This does not exclude that the system, apparatus, or device may also be adapted for providing another controlling mode, or a plurality of other controlling modes. Likewise, this may not exclude that before executing the mode and/or after executing the mode, one or more other modes may be executed.

However, in embodiments, a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts an embodiment of the system of the invention;
Figs 2-3 schematically depict some further aspect of the system;
Fig. 4 schematically depicts some aspects of the cartridge;
Fig. 5 schematically depicts some further aspects of the invention; and
Figs 6-7 schematically depict some further aspects of the cartridge.

The schematic drawings are not necessarily to scale.

### DETAILED DESCRIPTION OF THE EMBODIMENTS

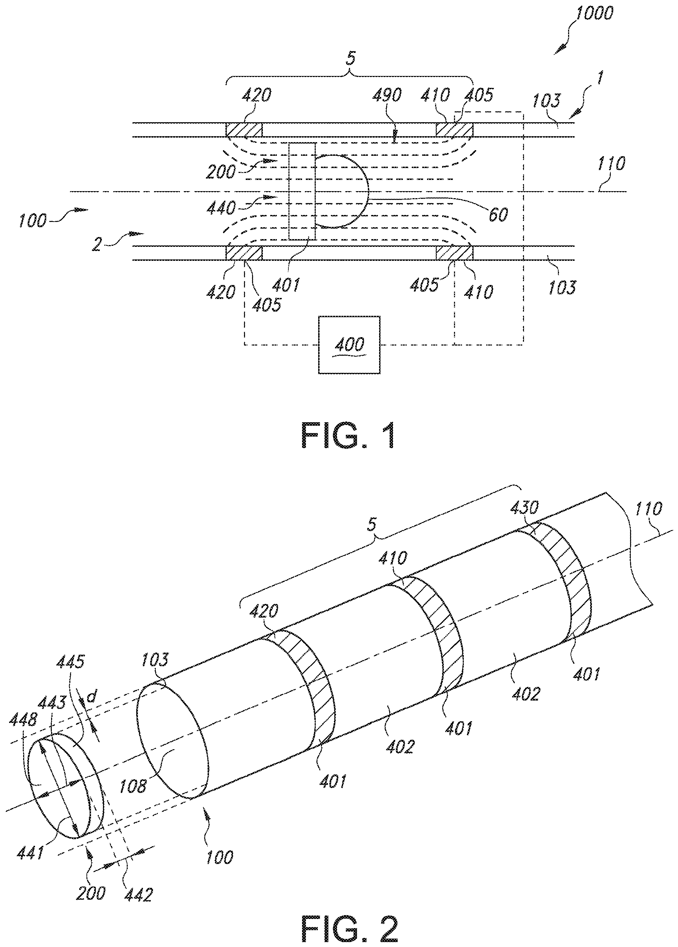

Fig. 1 schematically depicts an embodiment of the heat treatment system 1000 for heat-treating, such as sterilizing a product 60, especially a (packaged) food product 60. The system 1000 essentially comprises the heat treatment apparatus 1 comprising a duct 100, and a product transport system 200 for transporting the product 60 and the electric field guiding element 440 (herein further also indicated as field-guiding element 440) of the product transport system 200 through the duct 100. The duct 100 has an axis of elongation, i.e. the duct axis 110, and in the embodiment (especially during operation), the duct 100 holds a liquid 2.

The apparatus 1 further comprises the RF heating zone 5 comprising a main electrode 410 and a first counter electrode 420, in the embodiment functionally connected to an RF generator 400 that generates a (first) electric field 490 between the main electrode 410 and the (first) counter electrode 420, as indicated by the field lines (no directions indicated). The electric field 490 is especially parallel to the duct axis 110. The RF generator 400 is connected to the respective electrodes 410, 420. The respective positions/locations at the electrodes 410, 420 (and 430, see Fig. 2) (where the RF generator 400 is connected/connectable to the electrodes 410, 420, 430), are herein also referred to as connection locations 405. The RF generator 400 may be connected to the electrodes 410, 420, 430 at one or more connection locations 405 of the respective electrode 410, 420, 430. In the depicted embodiment, the RF generator 400 is connected to the main electrode 410 at two connection locations 405, especially arranged opposite to each other with respect to the duct axis 110. In further embodiments (not shown), the RF generator 400 is connected to the main electrode 410 via the conductive diversion element, e.g. via a conductive ring, configured around the main electrode 410, especially wherein the RF generator 400 is connected to the conductive diversion element at a first position and wherein the main electrode 410 is connected to the conductive diversion element at a (second) position, opposite to the first location (with respect to the duct axis 410).

The field-guiding element 440 comprises electrically conductive material 401 and may function (and is therefore also indicated herein) as a floating electrode 440. The field-guiding element 440 is configured to be electrically insulated from the electrodes main electrode 410, the (first) counter electrode 420 and from the further counter electrode 430 if present (see Fig. 2) during transport through the duct 100.

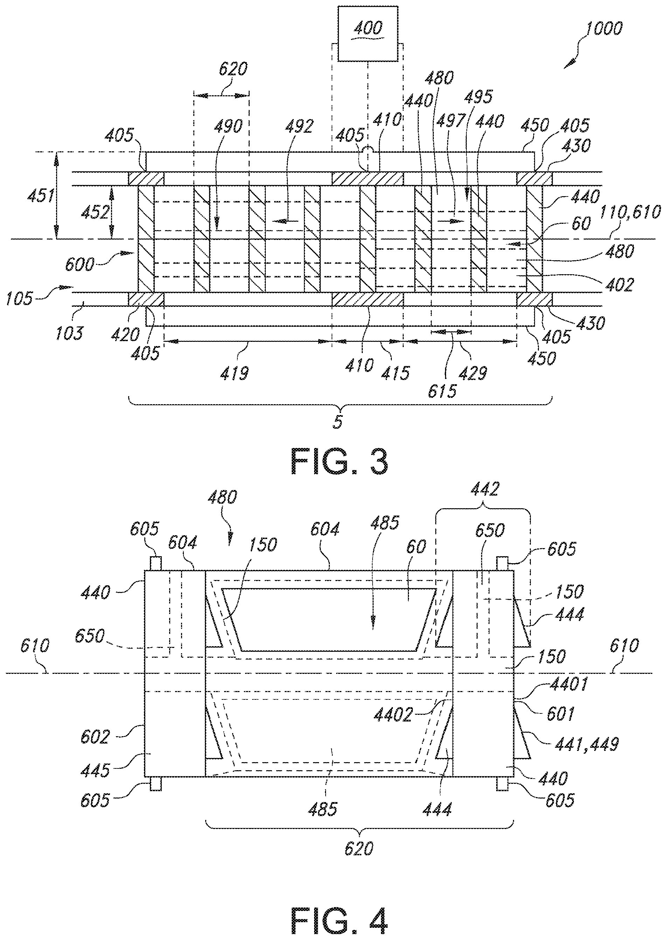

In Figs 2 and 3, some further aspects of the system 1000 and the field-guiding element 440 are depicted. The embodiments of these figures comprise a further counter electrode 430. Therefore, now the RF zone 5 comprises the further counter electrode 430 in addition to the main electrode 410 and the (first) counter electrode 420. Like the first counter electrode 420, the further counter electrode 430 is configured for functionally coupling to the RF generator 400. The first counter electrode 420 and the further counter electrode 430 are arranged at the opposite sides of the main electrode 410. Furthermore, the further counter electrode 430 generates (during operation) a further electric field 495 in the duct 100 between the main electrode 410 and the further counter electrode 430, having a direction 497 that is opposite to the direction 492 of the first electric field 490.

During operation and/or in the method, a product 60 and an field-guiding element 440 may be transported through the RF heating zone 5 along the duct axis 110 of the duct 100 comprising a (pressurized) liquid 2, and an electric field 490 may be generated in the duct 100 between a main electrode 410 and at least one counter electrode 420 (especially at least the first counter electrode 420), and optionally also the further counter electrode 430) parallel to the duct axis 110.

Fig. 2 further depicts the dimensions, i.e., the height 443, the width 441, and the thickness 442, of the electric field guiding element 440 as defined herein. The thickness 442 is configured to be arranged parallel to the duct axis 110 during transport through the duct 100. The field-guiding element 440 comprises essentially a flat body 445, wherein the height 443 and the width 441 are larger than the thickness 442. Furthermore, in the depicted embodiments, the cross-sectional area 448 of body 445 of the field-guiding element 440 almost completely covers the inner cross-sectional area 108 of the duct 100 as is demonstrated by the small clearance d between the duct wall 103 and the field-guiding element 440. In the embodiment in Fig. 2, the electrodes 410, 420, 430 and the duct 100 are cylindrical, yet other shapes are possible as well.

The electrodes 410, 420, 430 (comprising conductive material 401) are configured in the wall 103 that further comprises electrical insulating material 402 between the electrodes 410, 420, 430. The electrodes 410, 420, 430 are configured at an electrode-to-axis distance 452 from the duct axis 110, see Fig. 3. Fig. 3 further depicts an embodiment of the apparatus 1 with a shield 450 configured coaxially to the duct axis 110 around the duct 100 at the RF heating zone 5. The shield 450 may in embodiments comprise a square cross-sectional area, whereas the duct 100 may (in the same embodiment of the system 1000) be cylindrical. Yet, because the shield 450 substantially completely surrounds the duct 100 at the location of the heating zone 5, a shield-to-axis distance 451 may be defined by the shortest distance 451 between the duct axis 110 and the shield 450. In depicted embodiment, the ratio of the shield-to-axis distance 451 to the electrode-to-axis distance 452 is less than 2. In other embodiments, the ratio may be larger.

Figs 3-5 further also depict aspects of the cartridge 600. In embodiments of the system 1000, the product transport system 200 comprises the cartridge 600 for transporting the product 60 through the duct 100. In the method and/or during operation, the cartridge 600 may be transported through the RF heating zone 5 in the duct 100, along the duct axis 110, while the electric field 490 is generated in the duct 100 between the main electrode 410 and at least one counter electrode 420 (and optionally the further counter electrode 430) parallel to the duct axis 110. During transport, the cartridge axis 610 is arranged parallel to the duct axis 110.

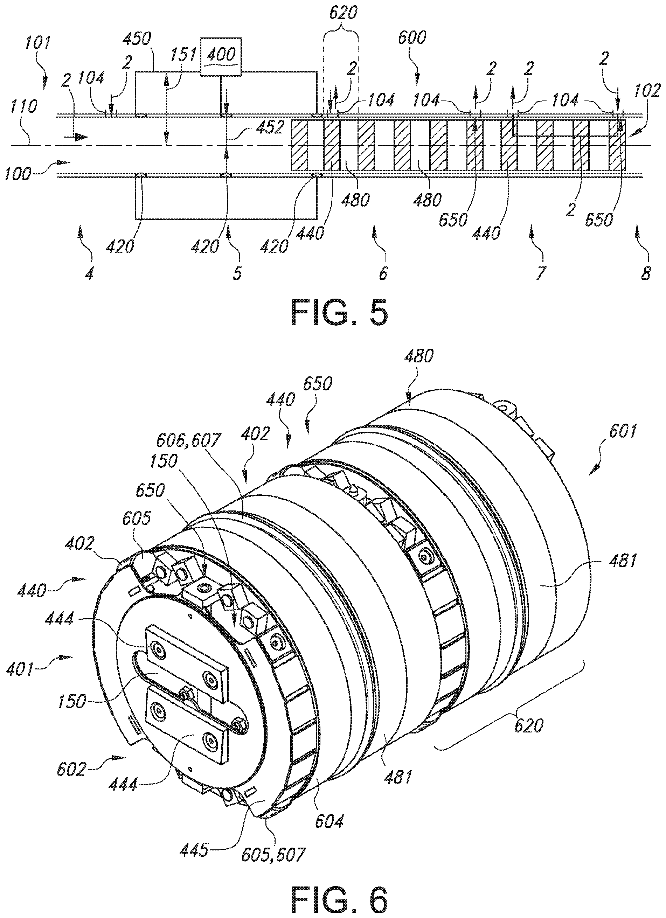

The cartridge 600 comprises an assembly of the field-guiding element 440 and a product receiver 480 for hosting the product 60 in a cavity 485 of the product receiver 480. The product receiver 480 comprises an electrically insulating material 402. Furthermore, the field-guiding element 440 and the product receiver 480 are configured adjacent to each other along the cartridge axis 610 In Figs 3 and 5, the cartridge 600 comprises a plurality of field-guiding elements 440 and product receivers 480 wherein alternately one field-guiding element 440 and one product receiver 480 are configured adjacent to each other along the cartridge axis 610. As such, a combination of one field-guiding element 440 and one product receiver 480 may herein also be referred to a repeating cartridge unit 620.

The cartridge 600 may comprise a liquid channel 150 from the first end 601 to a second end 602 of the cartridge 600 for providing a fluid connection between the one or more cavities 485 and an external of the cartridge 600, such as with the liquid 2 in the duct 100. The liquid channel 150 may also comprise branches such as depicted in Fig. 4. There, the liquid channel 150 is also in fluid connection with the opening 650 at the edge 604 of the cartridge. Furthermore, the opening 650 may also be in fluid connection with the external of the cartridge 600.

The embodiment depicted in Fig. 4, further comprises a field-incoupling element 444. Such element 444 may be configured to deflect at least part of the first electric field 490 and/or the further electric field 495 towards the product 60 during transport of the product 60 through the RF heating zone 5. The shape of the field-guiding element 440 may therefore especially match the shape of the (packaged food) product 60, such as the shape of the tray comprising the slanted or sloped brick-like shape or (sloped) cuboid shape as depicted in the figure. It is noted that the field-incoupling element 444 extends from the body 445 of the field-guiding element 440. Furthermore, possible spacer elements 605 are especially not part of the body 445 of the field-guiding element 440. The thickness 442 of the field-guiding element 440 includes protrusions 449 extending from the first side 4401 and/or the second side 4402 of the field-guiding element 440.

In specific embodiments, during operation (continuously) at least one field-guiding element 440 is surrounded by the main electrode 410, see Fig. 3. Therefore, in embodiments, the length 415 of the main electrode 410 in a direction parallel to the duct axis 110 is equal to or longer than the shortest distance 615 between two neighboring field-guiding elements 440. Optionally also the further electrodes 420, 430 surround another field-guiding element 440 at the same time, herein also indicated as the first configuration. Such configuration is schematically depicted in Fig. 3.

Fig. 3 further depicts an embodiment wherein a first inter-electrode distance 419, defined by the shortest distance between the main electrode 410 and the first counter electrode 420, is larger than the second inter-electrode distance 429, between the main electrode 410 and the further counter electrode 430. In further embodiments, these inter-electrode distances 419, 429 may have an equal length.

In Fig. 5, an embodiment of the system 1000 is depicted, wherein the duct 100 comprises an arrangement of zones especially fluidly connected to each other and arranged from the upstream side 101 of the duct 100 to the downstream side 102 of the duct 100 in the next order: the feeding zone 4, the RF heating zone 5, the holding zone 6 the cooling zone 7, and the extraction zone 8. In such embodiment, the product 60 and the field-guiding element 440, or especially the cartridge 600, may be transporting from the feeding zone 4 to the cooling zone 7 along the duct axis 110. It is noted that only part of the cartridge 600 is shown in the heating zone 5, for clarity reasons.

The duct 100 of the embodiment further comprises five liquid ports 104 configured for providing liquid 2 to the duct 100 and/or for extracting liquid 2 from the duct 100 in some of the zones. In the figure, e.g., liquid 2 may be introduced at the downstream side of the cooling zone 7 and being extracted at the upstream side of the cooling zone 7, schematically indicated in Fig. 5 by a line depicting the liquid 2 flow through the cartridge 600 in the cooling zone 7. Furthermore, in the holding zone 6, liquid may be introduced at the upstream side of the zone 6 and be extracted at the downstream side of the zone 6. As such, a flow direction of the liquid 2 in the duct 100 in a first zone 4,5,6,7,8 may be selected independently from the flow direction of the liquid 2 in another zone of the respective zones 4,5,6,7,8. Furthermore, also the temperature of the liquid provided to a specific port 104 may be controlled to at least partially control the temperature in the duct in a specific zone 4,5,6,7,8. The ports 104 may of course in other embodiments be configured at other locations. The cartridge 600 may especially be configured for allowing such different flow directions in different zones.

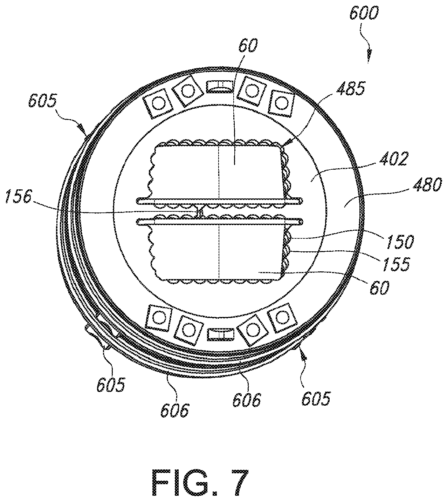

In Figs 6 and 7 some further aspect of the cartridge 600 are depicted. In these embodiments, the cartridge 600, especially the field-guiding element 440, comprises an opening 650 in fluid connection with the liquid channel 150. The opening 650 is configured at an edge 604 of the cartridge 600. Furthermore, the cartridge 600 comprises a sealing element 606 extending from the outer surface 481 of the product receiver 480 and configured to sealingly arrange the cartridge 600 in the duct 100. As such, the liquid 2 in the duct 100 may be substantially blocked from flowing from the first side 601 to the second side 602 of the cartridge 600 between the duct wall 103 and the outer surface 481 of the product receiver. Any liquid 2 provided to the duct 100 via the inlet port 104 may flow via the outer surface 481 of the product receiver into the opening 650 in the cartridge 600 and into the liquid channel 150. Because also the cavity 485, especially the volume between the cavity 485 and a product 60 hosted by the cavity 485 may be part of the liquid channel 150, the liquid 2 may flow along the product 60 towards a neighboring field-guiding element 440. The liquid 2 may successively exit the field guiding element 440 via the edge 604 of the cartridge 600 (or of the field-guiding element 440) to another liquid port 104, or via a side of the cartridge 660 (such a depicted in Fig. 6 comprising the field-incoupling elements 444). As such, the field-guiding element 440 may especially define at least a part of the liquid channel 150. Figs 6 and 7, further show an alignment element 607 comprising four spacer elements 605. The alignment element 607 is configured for centering the cartridge 600 in the duct and may touch the wall 103 of the duct 100 during operation. The element 607 especially comprises electrically insulating material 402. It is noted that also the sealing element 606 may function as an alignment element 607.

In Fig. 7, it is further depicted that the cavity 60 of the product receiver 480 holding a product 60 may define a part of the liquid channel 150. The channel 150 may be completely surrounding the product 60 because of the profile 155 of the wall of the cavity 485. It is further noted that a heat expansion element 156 is configured in the electrically insulating material 402 for allowing the material 402 to expand and shrink because of temperature changes during treatment. It is further noted that the two products 60 in Fig. 7 comprise a tray having a slanted or sloped brick-like shape. That shape especially corresponds to the shape of the two field-incoupling elements 444 depicted in Fig. 6. Therefore, the embodiment of Fig. 7 may especially be connected to the embodiment of the cartridge 600 of Fig. 6.

The tenn "plurality" refers to two or more. Furthermore, the terms "a plurality of" and "a number of" may be used interchangeably. The terms "substantially" and "essentially" herein, such as in "substantially all light" or in "substantially consists", will be understood by the person skilled in the art. The terms "substantially" and "essentially may also include embodiments with "entirely", "completely", "all", etc. Hence, in embodiments the adjectives substantially and essentially may also be removed. Where applicable, the terms "substantially" and "essentially" may also relate to 90% or higher, such as 95% or higher, especially 99% or higher, even more especially 99.5% or higher, including 100%. The term "comprise" includes also embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. The devices, apparatus, or systems herein are amongst others described during operation. As will be clear to the person skilled in the art, the invention is not limited to methods of operation or devices in operation. The terms "upstream" and "downstream" relate to an arrangement of items or features relative to the propagation of the product in the duct (during operation), wherein relative to a first position within the duct, a second position in the duct closer to an inlet for the product is "upstream", and a third position within the duct further away from the inlet of the product (but closer to an outlet for the heat-treated product) is "downstream". It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim.

Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A heat treatment system (1000) comprising a heat treatment apparatus (1) and a product transport system (200), wherein
- the heat treatment apparatus (1) comprises (i) a duct (100) having a duct axis (110), wherein the duct (100) is configured for holding a liquid (2), and (ii) an RF heating zone (5) comprising a main electrode (410) and a first counter electrode (420) configured for functionally connecting to an RF generator (400) to generate during operation a first electric field (490) in the duct (100) between the main electrode (410) and the first counter electrode (420) parallel to the duct axis (110),
- the product transport system (200) comprises an electric field guiding element (440) comprising an electrically conductive material (401), wherein the electric field guiding element is configured to be electrically insulated from the electrodes (410, 420) during transport through the duct (100),
- the product transport system (200) is configured to transport a product (60) and the electric field guiding element (440) through the duct (100).

2. The heat treatment system (1000) according to claim 1, wherein the electric field guiding element (440) comprises a height (443), a width (441), and a thickness (442), wherein the thickness (442) is configured to be arranged parallel to the duct axis (110) during transport through the duct (100), wherein a ratio of the height (443) to the thickness (442) is larger than 2 and wherein a ratio of the width (441) relative to the thickness (442) is larger than 2, wherein a ratio of a cross-sectional area (448) of the field guiding element (440) which is configured to be arranged perpendicular to the duct axis (110) during transport through the duct (100), relative to an inner cross-sectional area (108) of the duct (100) is selected to be at least 0.5 and to be smaller than 1.

3. The heat treatment system (1000) according to any one of the preceding claims, wherein the RF heating zone (5) comprises a further counter electrode (430), wherein the further counter electrode (430) and the first counter electrode (420) are arranged at opposite sides of the main electrode (410), wherein the further counter electrode (430) is configured for functionally coupling to the RF generator (400) to generate during operation a further electric field (495) in the duct (100) between the main electrode (410) and the further counter electrode (430), wherein a direction (497) of the further electric field (495) and a direction (492) of the first electric field (490) are configured opposite to each other.

4. The heat treatment system (1000) according to any one of the preceding claims, wherein the duct (100) comprises a wall (103) comprising the electrodes (410, 420, 430), and an electrically insulating material (402) configured between the electrodes (410, 420, 430), wherein a shortest distance between the electrodes (410, 420, 430) and the duct axis (110) defines an electrode-to-axis distance (452), wherein the apparatus (1) further comprises a shield (450) configured coaxially to the duct axis (110) around the duct (100) at the RF heating zone (5), wherein a shortest distance between the duct axis (110) and the shield (450) define a shield-to-axis distance (451), and wherein a ratio of the shield-to-axis distance (451) to the electrode-to-axis distance (452) is selected in the range of 2-6

5. The heat treatment system (1000) according to any one of the preceding claims, wherein the product transport system (200) comprises a cartridge (600) for transporting the product (60) through the duct (100), wherein the cartridge (600) comprises an assembly of (i) the electric field guiding element (440) and (ii) a product receiver (480) comprising a cavity (485) configured to host the product (60), wherein the product receiver (480) comprising an electrically insulating material (402), wherein the cartridge (600) comprises a cartridge axis (610) configured to be arranged parallel to the duct axis (110) during transport through the duct (100), wherein the electric field guiding element (440) and the product receiver (480) are configured adjacent to each other along the cartridge axis (610), wherein the cartridge (600) comprises a plurality of electric field guiding elements (440), wherein a length (415) of the main electrode (410) in a direction parallel to the duct axis (110) is equal to or longer than a shortest distance (615) between two neighboring electric field guiding elements (440).

6. The heat treatment system (1000) according to claim 5, wherein the cartridge (600) comprises a plurality of electric field guiding elements (440) and/or a plurality of product receivers (480), wherein alternately one electric field guiding element (440) and one product receiver (480) are configured adjacent to each other along the cartridge axis (610), wherein the cartridge (600) comprises a liquid channel (150) configured from a first end (601) of the cartridge (600) to a second end (602) of the cartridge (600) and configured to provide a fluid connection between the one or more cavities (485) and an external of the cartridge (600).

7. The heat treatment system (1000) according to any one of the preceding claims, wherein the duct (100) further comprises:
- an arrangement of zones comprising a feeding zone (4) configured upstream of the RF heating zone (5), a holding zone (6) configured downstream of the RF heating zone (5), a cooling zone (7) configured downstream of the holding zone (6), and an extraction zone (8) configured downstream of the cooling zone (7),
- one or more liquid ports (104) configured in one or more of the zones selected from the feeding zone (4), the RF heating zone (5), the holding zone (6), the cooling zone (7), and the extraction zone (8) for providing liquid (2) to the duct (100) and/or for extracting liquid (2) from the duct (100),
wherein the heat treatment system (1000) is configured for providing a flow direction of the liquid (2) in the duct (100) in a first zone of the respective zones (4, 5, 6, 7, 8), independently from the flow direction of the liquid (2) in another zone of the respective zones (4, 5, 6, 7, 8) by providing liquid (2) to the duct (100) and/or extracting liquid (2) from the duct (100) via one or more of the liquid ports (104).

8. The heat treatment system (1000) according to claim 6 and claim 7, wherein the cartridge (600) comprises an opening (650) configured at an edge (604) of the cartridge (600), configured for receiving the liquid (2) provided via at least one of the liquid ports (104), wherein the opening (650) is configured in fluid connection with the liquid channel (150), wherein the cartridge (600) is configured for receiving liquid (2) provided to the liquid port (104) and directing the liquid (2) through the liquid channel (150) and through one or more of the cavities (485) in cartridge (600) along one or more products (60) hosted by the cartridge (600).

9. The heat treatment system (1000) according to any one of the preceding claims, wherein the electric field guiding element (440) comprises a field-incoupling element (444) configured to deflect at least part of the first electric field (490) towards the product (60) during transport of the product (60) through the RF heating zone (5) and/or to deflect at least part of the further electric field (495) towards the product (60) during transport of the product (60) through the RF heating zone (5).

10. A cartridge (600) for transporting a product (60) through a duct (100) of a heat treatment apparatus (1) comprising an electric field (490) generated in the duct (100) by an RF generator (400), wherein the cartridge (600) comprises an assembly of (i) an electric field guiding element (440) comprising an electrically conductive material (401), and (ii) a product receiver (480) comprising an electrically insulating material (402), wherein the product receiver (480) comprises a cavity (485) to host the product (60), wherein the cartridge (600) comprises a liquid channel (150) providing a fluid connection between the cavity (485) and an external of the cartridge (600).

11. The cartridge (600) according to claim 10, wherein the cartridge (600) comprises a cartridge axis (610) configured to be arranged parallel to a duct axis (110) of the duct (100) during transport through the duct (100), wherein the electric field guiding element (440) and the product receiver (480) are configured adjacent to each other along the cartridge axis (610), wherein the cartridge (600) comprises a plurality of electric field guiding elements (440) and/or a plurality of product receivers (480), wherein alternately one electric field guiding element (440) and one product receiver (480) are configured adjacent to each other along the cartridge axis (610), wherein the liquid channel (150) is configured to provide a fluid connection from a first end (601) of the cartridge (610) to a second end (602) of the cartridge (600), wherein a ratio of a maximum cross-sectional area (648) of the cartridge (600) to an inner cross-sectional area (108) of the duct (100) is selected to be smaller than 1 and at least 0.8, wherein the cartridge comprises an alignment element (607) for aligning the cartridge axis (610) with the duct axis (110) and a sealing element (606) configured for blocking a liquid (2) flow along an outer surface (481) of the cartridge (600) from the first end (601) of the cartridge (600) to the second end (602) of the cartridge (600) during transport through the duct (100), wherein the cartridge (600) further comprises an opening (650) configured at an edge (604) of the cartridge (600), configured for receiving liquid (2) provided via a liquid port (104) in the duct (100), wherein the opening (650) is configured in fluid connection with the liquid channel (150).

12. The cartridge (600) according to claim any of the claims 10-11, wherein the electric field guiding element (440) comprises a field-incoupling element (444) configured to deflect at least part of the electric field (490) towards the product (60) during transport of the product (60) through the RF heating zone (5).

13. A method for heat-treating a product (60), wherein the method comprises:
- transporting the product (60) and an electric field guiding element (440) through an RF heating zone (5) in a duct (100) along a duct axis (110) of the duct (100), wherein the duct (100) comprises a liquid (2), and
- generating an electric field (490) in the duct (100) between a main electrode (410) and at least one counter electrode (420) parallel to the duct axis (110),
wherein the RF heating zone (5) comprises the main electrode (410) and the counter electrode (420), wherein the electric field guiding element (440) comprises an electrically conductive material (401), wherein the electric field guiding element (440) is electrically isolated from the electrodes (410, 420) during transport through the duct (100).

14. The method according to claim 13, comprising:
- transporting a cartridge (600) through the RF heating zone (5) in the duct (100), along the duct axis (110), while generating the electric field (490) in the duct (100) between the main electrode (410) and the at least one counter electrode (420) parallel to the duct axis (110), wherein a cartridge axis (610) of the cartridge (600) is arranged parallel to the duct axis (110),
wherein the cartridge (600) comprises an assembly of (i) the electric field guiding element (440) and (ii) a product receiver (480) comprising an electrically insulating material (402), wherein the product receiver (480) comprises a cavity (485) hosting the product (60) and configured in fluid connection with the liquid (2) in the duct (100), wherein the electric field guiding element (440) and the product receiver (480) are configured adjacent to each other along the duct axis (110); and
- providing a flow of the liquid (2) in the duct (100) wherein the flow comprises a flow direction, wherein the flow direction is independently selected from a direction of the transport of the product (60) through the RF heating zone (5) in the duct (100).

15. The method according to any of the claims 13-14, wherein the duct (100) comprises:
- an arrangement of zones comprising a feeding zone (4) configured upstream of the RF heating zone (5), a holding zone (6) configured downstream of the RF heating zone (5), a cooling zone (7) configured downstream of the holding zone (6), and an extraction zone (8) configured downstream of the cooling zone (7),
- one or more liquid ports (104) configured in one or more of the zones selected from the feeding zone (4), the RF heating zone (5), the holding zone (6), the cooling zone (7), and the extraction zone (8),
wherein the method comprises:
- transporting the product (60) and the electric field guiding element (440) from the feeding zone (4) to the cooling zone (7) along the duct axis (110),
wherein the method further comprises:
- providing a direction of a flow of the liquid (2) in the duct (100) in one or more of the respective zones (4, 5, 6, 7, 8) by providing liquid (2) to the duct (100) and/or extracting liquid (2) from the duct (100) via one or more of the liquid ports (104), wherein the liquid (2) is directed via a liquid channel (150) in the cartridge (600) along the product (60) hosted in the cavity (485), wherein an opening (605) in the cartridge (600) configured at an edge (604) of the cartridge (600) provides a fluid connection between the liquid channel (150) and the one or more of the liquid ports (104), wherein the direction of the flow of the liquid (2) in the duct (100) in any of the respective zones (4, 5, 6, 7, 8) is selected independently from the direction of the transport of the product through the duct (100).

## Patentansprüche

1. Wärmebehandlungssystem (1000), umfassend eine Wärmebehandlungsvorrichtung (1) und ein Produkttransportsystem (200), wobei
- die Wärmebehandlungsvorrichtung (1) (i) einen Schacht (100) mit einer Schachtachse (110), wobei der Schacht (100) ausgestaltet ist, um eine Flüssigkeit (2) zu enthalten, und (ii) eine HF-Heizzone (5) umfasst, umfassend eine Hauptelektrode (410) und eine erste Gegenelektrode (420), die zum funktionellen Verbinden mit einem HF-Generator (400) ausgestaltet sind, um während des Betriebs ein erstes elektrisches Feld (490) in dem Schacht (100) zwischen der Hauptelektrode (410) und der ersten Gegenelektrode (420) parallel zu der Schachtachse (110) zu erzeugen,
- wobei das Produkttransportsystem (200) ein Führungselement (440) des elektrischen Feldes umfasst, das ein elektrisch leitfähiges Material (401) umfasst, wobei das Führungselement des elektrischen Feldes ausgestaltet ist, um während des Transports durch den Schacht (100) hindurch von den Elektroden (410, 420) elektrisch isoliert zu sein,
- das Produkttransportsystem (200) ausgestaltet ist, um ein Produkt (60) und das Führungselement (440) des elektrischen Feldes durch den Schacht (100) hindurch zu transportieren.

2. Wärmebehandlungssystem (1000) nach Anspruch 1, wobei das Führungselement (440) des elektrischen Feldes eine Höhe (443), eine Breite (441) und eine Dicke (442) umfasst, wobei die Dicke (442) ausgestaltet ist, um während des Transports durch den Schacht (100) hindurch parallel zu der Schachtachse (110) angeordnet zu sein, wobei ein Verhältnis der Höhe (443) zu der Dicke (442) größer als 2 ist, und wobei ein Verhältnis der Breite (441) relativ zu der Dicke (442) größer als 2 ist, wobei ein Verhältnis einer Querschnittfläche (448) des Führungselements (440) des Feldes, die ausgestaltet ist, um während des Transports durch den Schacht (100) hindurch senkrecht zu der Schachtachse (110) angeordnet zu sein, so gewählt ist, dass es relativ zu einer inneren Querschnittfläche (108) des Schachts (100) mindestens 0,5 und kleiner als 1 ist.

3. Wärmebehandlungssystem (1000) nach einem der vorhergehenden Ansprüche, wobei die HF-Heizzone (5) eine weitere Gegenelektrode (430) umfasst, wobei die weitere Gegenelektrode (430) und die erste Gegenelektrode (420) an entgegengesetzten Seiten der Hauptelektrode (410) angeordnet sind, wobei die weitere Gegenelektrode (430) ausgestaltet ist, um funktionell an den HF-Generator (400) zu koppeln, um während des Betriebs in dem Schacht (100) zwischen der Hauptelektrode (410) und der weiteren Gegenelektrode (430) ein weiteres elektrisches Feld (495) zu erzeugen, wobei eine Richtung (497) des weiteren elektrischen Feldes (495) und eine Richtung (492) des ersten elektrischen Feldes (490) entgegengesetzt zueinander ausgestaltet sind.

4. Wärmebehandlungssystem (1000) nach einem der vorhergehenden Ansprüche, wobei der Schacht (100) eine Wand (103), die die Elektroden (410, 420, 430) umfasst, und ein elektrisch isolierendes Material (402) umfasst, das zwischen den Elektroden (410, 420, 430) ausgestaltet ist, wobei ein kürzester Abstand zwischen den Elektroden (410, 420, 430) und der Schachtachse (110) einen Elektrode-zu-Achse-Abstand (452) definiert, wobei die Vorrichtung (1) des Weiteren eine Abschirmung (450) umfasst, die koaxial zu der Schachtachse (110) um den Schacht (100) herum an der HF-Heizzone (5) ausgestaltet ist, wobei ein kürzester Abstand zwischen der Schachtachse (110) und der Abschirmung (450) einen Abschirmung-zu-Achse-Abstand (451) definiert, und wobei ein Verhältnis des Abschirmung-zu-Achse-Abstands (451) zu dem Elektrode-zu-Achse-Abstand (452) im Bereich von 2 bis 6 gewählt ist.

5. Wärmebehandlungssystem (1000) nach einem der vorhergehenden Ansprüche, wobei das Produkttransportsystem (200) ein Magazin (600) zum Transportieren des Produkts (60) durch den Schacht (100) umfasst, wobei das Magazin (600) eine Anordnung von (i) dem Führungselement (440) des elektrischen Feldes und (ii) einer Produktaufnahme (480) umfasst, die einen Hohlraum (485) umfasst, der ausgestaltet ist, um das Produkt (60) unterzubringen, wobei die Produktaufnahme (480) ein elektrisch isolierendes Material (402) umfasst, wobei das Magazin (600) eine Magazinachse (610) umfasst, die ausgestaltet ist, um während des Transports durch den Schacht (100) hindurch parallel zu der Schachtachse (110) angeordnet zu werden, wobei das Führungselement (440) des elektrischen Feldes und die Produktaufnahme (480) entlang der Magazinachse (610) benachbart zueinander ausgestaltet sind, wobei das Magazin (600) eine Vielzahl von Führungselementen (440) des elektrischen Feldes umfasst, wobei eine Länge (415) der Hauptelektrode (410) in einer Richtung parallel zu der Schachtachse (110) gleich einem kürzesten Abstand (615) zwischen zwei benachbarten Führungselementen (440) des elektrischen Feldes oder länger ist.

6. Wärmebehandlungssystem (1000) nach Anspruch 5, wobei das Magazin (600) eine Vielzahl von Führungselementen (440) des elektrischen Feldes und/oder eine Vielzahl von Produktaufnahmen (480) umfasst, wobei alternierend ein Führungselement (440) des elektrischen Feldes und eine Produktaufnahme (480) benachbart zueinander entlang der Magazinachse (610) ausgestaltet sind, wobei das Magazin (600) einen Flüssigkeitskanal (150) umfasst, der von einem ersten Ende (601) des Magazins (600) bis zu einem zweiten Ende (602) des Magazins (600) ausgestaltet ist, und ausgestaltet ist, um eine Fluidverbindung zwischen dem einen oder den mehreren Hohlräumen (485) und einer Außenseite des Magazins (600) bereitzustellen.

7. Wärmebehandlungssystem (1000) nach einem der vorhergehenden Ansprüche, wobei der Schacht (100) des Weiteren umfasst:
- eine Anordnung von Zonen, umfassend eine Speisezone (4), die stromaufwärts der HF-Heizzone (5) ausgestaltet ist, eine Verweilzone (6), die stromabwärts der HF-Heizzone (5) ausgestaltet ist, eine Kühlzone (7), die stromabwärts der Verweilzone (6) ausgestaltet ist, und eine Extraktionszone (8), die stromabwärts der Kühlzone (7) ausgestaltet ist,
- einen oder mehrere Flüssigkeitsanschlüsse (104), der/die in einer oder mehreren der Zonen ausgewählt aus der Speisezone (4), der HF-Heizzone (5), der Verweilzone (6), der Kühlzone (7) und der Extraktionszone (8) ausgestaltet ist/sind, um dem Schacht (100) Flüssigkeit (2) bereitzustellen und/oder um Flüssigkeit (2) aus dem Schacht (100) zu extrahieren,
wobei das Wärmebehandlungssystem (1000) ausgestaltet ist, um eine Flussrichtung der Flüssigkeit (2) in dem Schacht (100) in einer ersten Zone der jeweiligen Zonen (4, 5, 6, 7, 8) unabhängig von der Flussrichtung der Flüssigkeit (2) in einer anderen Zone der jeweiligen Zonen (4, 5, 6, 7, 8) bereitzustellen, indem über einen oder mehrere der Flüssigkeitsanschlüsse (104) dem Schacht (100) Flüssigkeit (2) bereitgestellt wird und/oder Flüssigkeit (2) aus dem Schacht (100) extrahiert wird.

8. Wärmebehandlungssystem (1000) nach Anspruch 6 und Anspruch 7, wobei das Magazin (600) eine Öffnung (650) umfasst, die an einem Rand (604) des Magazins (600) ausgestaltet ist, zum Aufnehmen der Flüssigkeit (2) ausgestaltet ist, die über mindestens einen der Flüssigkeitsanschlüsse (104) bereitgestellt wird, wobei die Öffnung (650) in Fluidverbindung mit dem Flüssigkeitskanal (150) ausgestaltet ist, wobei das Magazin (600) zum Aufnehmen von Flüssigkeit (2), die dem Flüssigkeitsanschluss (104) bereitgestellt wird, und Lenken der Flüssigkeit (2) durch den Flüssigkeitskanal (150) und durch einen oder mehrere von den Hohlräumen (485) in dem Magazin (600) entlang einem oder mehreren Produkten (60), die in dem Magazin (600) untergebracht sind, ausgestaltet ist.

9. Wärmebehandlungssystem (1000) nach einem der vorhergehenden Ansprüche, wobei das Führungselement (440) des elektrischen Feldes ein Feldeinkoppelelement (444) umfasst, das ausgestaltet ist, um mindestens einen Teil des ersten elektrischen Feldes (490) während des Transports des Produkts (60) durch die HF-Heizzone (5) in Richtung des Produkts (60) abzulenken, und/oder mindestens einen Teil des weiteren elektrischen Feldes (495) während des Transports des Produkts (60) durch die HF-Heizzone (5) in Richtung des Produkts (60) abzulenken.

10. Magazin (600) zum Transportieren eines Produkts (60) durch einen Schacht (100) einer Wärmebehandlungsvorrichtung (1), umfassend ein elektrisches Feld (490), das in dem Schacht (100) durch einen HF-Generator (400) erzeugt wird, wobei das Magazin (600) eine Anordnung aus (i) einem Führungselement (440) des elektrischen Feldes, das ein elektrisch leitfähiges Material (401) umfasst, und (ii) einer Produktaufnahme (480) umfasst, die ein elektrisch isolierendes Material (402) umfasst, wobei die Produktaufnahme (480) einen Hohlraum (485) zum Unterbringen des Produkts (60) umfasst, wobei das Magazin (600) einen Flüssigkeitskanal (150) umfasst, der eine Fluidverbindung zwischen dem Hohlraum (485) und einer Außenseite des Magazins (600) bereitstellt.

11. Magazin (600) nach Anspruch 10, wobei das Magazin (600) eine Magazinachse (610) umfasst, die ausgestaltet ist, um während des Transports durch den Schacht (100) hindurch parallel zu einer Schachtachse (110) des Schachts (100) angeordnet zu werden, wobei das Führungselement (440) des elektrischen Feldes und die Produktaufnahme (480) entlang der Magazinachse (610) benachbart zueinander ausgestaltet sind, wobei das Magazin (600) eine Vielzahl von Führungselementen (440) des elektrischen Feldes und/oder eine Vielzahl von Produktaufnahmen (480) umfasst, wobei alternierend ein Führungselement (440) des elektrischen Feldes und eine Produktaufnahme (480) benachbart zueinander entlang der Magazinachse (610) ausgestaltet sind, wobei der Flüssigkeitskanal (150) ausgestaltet ist, um eine Fluidverbindung von einem ersten Ende (601) des Magazins (610) zu einem zweiten Ende (602) des Magazins (600) bereitzustellen, wobei ein Verhältnis einer maximalen Querschnittfläche (648) des Magazins (600) zu einer inneren Querschnittfläche (108) des Schachts (100) so gewählt ist, dass es kleiner als 1 ist und mindestens 0,8 beträgt, wobei das Magazin ein Ausrichtelement (607) zum Ausrichten der Magazinachse (610) mit der Schachtachse (110) und ein Dichtungselement (606) umfasst, das ausgestaltet ist, um den Fluss einer Flüssigkeit (2) entlang einer Außenoberfläche (481) des Magazins (600) von dem ersten Ende (601) des Magazins (600) zu dem zweiten Ende (602) des Magazins (600) während des Transports durch den Schacht (100) hindurch zu blockieren, wobei das Magazin (600) des Weiteren eine Öffnung (650) umfasst, die an einem Rand (604) des Magazins (600) ausgestaltet ist, zum Aufnehmen von Flüssigkeit (2) ausgestaltet ist, die über einen Flüssigkeitsanschluss (104) in dem Schacht (100) bereitgestellt wird, wobei die Öffnung (650) in Fluidverbindung mit dem Flüssigkeitskanal (150) ausgestaltet ist.

12. Magazin (600) nach einem der Ansprüche 10 bis 11, wobei das Führungselement (440) des elektrischen Feldes ein Feldeinkoppelelement (444) umfasst, das ausgestaltet ist, um mindestens einen Teil des elektrischen Feldes (490) während des Transports des Produkts (60) durch die HF-Heizzone (5) hindurch in Richtung des Produkts (60) abzulenken.

13. Verfahren zum Wärmebehandeln eines Produkts (60), wobei das Verfahren umfasst:
- Transportieren des Produkts (60) und eines Führungselements (440) des elektrischen Feldes durch eine HF-Heizzone (5) in einem Schacht (100) hindurch entlang einer Schachtachse (110) des Schachts (100), wobei der Schacht (100) eine Flüssigkeit (2) umfasst, und
- Erzeugen eines elektrischen Feldes (490) in dem Schacht (100) zwischen einer Hauptelektrode (410) und mindestens einer Gegenelektrode (420) parallel zu der Schachtachse (110),
wobei die HF-Heizzone (5) die Hauptelektrode (410) und die Gegenelektrode (420) umfasst, wobei das Führungselement (440) des elektrischen Feldes ein elektrisch leitfähiges Material (401) umfasst, wobei das Führungselement (440) des elektrischen Feldes während des Transports durch den Schacht (100) hindurch von den Elektroden (410, 420) elektrisch isoliert ist.

14. Verfahren nach Anspruch 13, umfassend:
- Transportieren eines Magazins (600) durch die HF-Heizzone (5) in dem Schacht (100) hindurch entlang der Schachtachse (110), während das elektrische Feld (490) in dem Schacht (100) zwischen der Hauptelektrode (410) und der mindestens einen Gegenelektrode (420) parallel zu der Schachtachse (110) erzeugt wird, wobei eine Magazinachse (610) des Magazins (600) parallel zu der Schachtachse (110) angeordnet ist,
wobei das Magazin (600) eine Anordnung aus (i) dem Führungselement (440) des elektrischen Feldes und (ii) einer Produktaufnahme (480) umfasst, die ein elektrisch isolierendes Material (402) umfasst, wobei die Produktaufnahme (480) einen Hohlraum (485) umfasst, in dem das Produkt (60) untergebracht ist, und in Fluidverbindung mit der Flüssigkeit (2) in dem Schacht (100) ausgestaltet ist, wobei das Führungselement (440) des elektrischen Feldes und die Produktaufnahme (480) benachbart zueinander entlang der Schachtachse (110) ausgestaltet sind; und
- Bereitstellen eines Flusses der Flüssigkeit (2) in dem Schacht (100), wobei der Fluss eine Flussrichtung umfasst, wobei die Flussrichtung unabhängig ausgewählt ist aus einer Richtung des Transports des Produkts (60) durch die HF-Heizzone (5) in dem Schacht (100) hindurch.

15. Verfahren nach einem der Ansprüche 13 bis 14, wobei der Schacht (100) umfasst:
- eine Anordnung von Zonen, umfassend eine Speisezone (4), die stromaufwärts der HF-Heizzone (5) ausgestaltet ist, eine Verweilzone (6), die stromabwärts der HF-Heizzone (5) ausgestaltet ist, eine Kühlzone (7), die stromabwärts der Verweilzone (6) ausgestaltet ist, und eine Extraktionszone (8), die stromabwärts der Kühlzone (7) ausgestaltet ist,
- einen oder mehrere Flüssigkeitsanschlüsse (104), der/die in einer oder mehreren der Zonen ausgewählt aus der Speisezone (4), der HF-Heizzone (5), der Verweilzone (6), der Kühlzone (7) und der Extraktionszone (8) ausgestaltet ist/sind,
wobei das Verfahren umfasst:
- Transportieren des Produkts (60) und des Führungselements (440) des elektrischen Feldes aus der Speisezone (4) zu der Kühlzone (7) entlang der Schachtachse (110), wobei das Verfahren des Weiteren umfasst:
- Bereitstellen einer Flussrichtung der Flüssigkeit (2) in dem Schacht (100) in einer oder mehreren der jeweiligen Zonen (4, 5, 6, 7, 8) durch Bereitstellen von Flüssigkeit (2) an den Schacht (100) und/oder Extrahieren von Flüssigkeit (2) aus dem Schacht (100) über einen oder mehrere der Flüssigkeitsanschlüsse (104), wobei die Flüssigkeit (2) über einen Flüssigkeitskanal (150) in dem Magazin (600) an dem in dem Hohlraum (485) untergebrachten Produkt (60) entlang gelenkt wird, wobei eine Öffnung (605) in dem Magazin (600), die am Rand (604) des Magazins (600) ausgestaltet ist, eine Fluidverbindung zwischen dem Flüssigkeitskanal (150) und einem oder mehreren von den Flüssigkeitsanschlüssen (104) bereitstellt, wobei die Richtung des Flusses der Flüssigkeit (2) in dem Schacht (100) in einer beliebigen der jeweiligen Zonen (4, 5, 6, 7, 8) unabhängig von der Richtung des Transports des Produkts durch den Schacht (100) hindurch ausgewählt wird.

## Revendications

1. Système de traitement thermique (1000) comprenant un appareil de traitement thermique (1) et un système de transport de produit (200), dans lequel
- l'appareil de traitement thermique (1) comprend (i) une conduite (100) ayant un axe de conduite (110), la conduite (100) étant configurée pour contenir un liquide (2), et (ii) une zone de chauffage RF (5) comprenant une électrode principale (410) et une première contre-électrode (420) configurée pour être reliée fonctionnellement à un générateur RF (400) pour générer en fonctionnement un premier champ électrique (490) dans la conduite (100) entre l'électrode principale (410) et la première contre-électrode (420) parallèle à l'axe de conduite (110),
- le système de transport de produit (200) comprend un élément de guidage de champ électrique (440) comprenant un matériau électriquement conducteur (401), l'élément de guidage de champ électrique étant configuré pour être isolé électriquement des électrodes (410, 420) pendant le transport à travers la conduite (100),
- le système de transport de produit (200) est configuré pour transporter un produit (60) et l'élément de guidage de champ électrique (440) à travers la conduite (100).

2. Système de traitement thermique (1000) selon la revendication 1, dans lequel l'élément de guidage de champ électrique (440) présente une hauteur (443), une largeur (441) et une épaisseur (442), dans lequel l'épaisseur (442) est configurée pour être disposée parallèlement à l'axe de conduite (110) pendant le transport à travers la conduite (100), dans lequel un rapport entre la hauteur (443) et l'épaisseur (442) est supérieur à 2 et dans lequel un rapport entre la largeur (441) et l'épaisseur (442) est supérieur à 2, dans lequel un rapport entre une aire de section transversale (448) de l'élément de guidage de champ (440) qui est configurée pour être disposée perpendiculairement à l'axe de conduite (110) pendant le transport à travers la conduite (100) et une aire de section transversale interne (108) de la conduite (100) est sélectionné pour être d'au moins 0,5 et pour être inférieur à 1.

3. Système de traitement thermique (1000) selon l'une quelconque des revendications précédentes, dans lequel la zone de chauffage RF (5) comprend une contre-électrode supplémentaire (430), dans lequel la contre-électrode supplémentaire (430) et la première contre-électrode (420) sont disposées sur des côtés opposés de l'électrode principale (410), dans lequel la contre-électrode supplémentaire (430) est configurée pour être couplée fonctionnellement au générateur RF (400) pour générer en fonctionnement un champ électrique supplémentaire (495) dans la conduite (100) entre l'électrode principale (410) et la contre-électrode supplémentaire (430), dans lequel une direction (497) du champ électrique supplémentaire (495) et une direction (492) du premier champ électrique (490) sont configurées à l'opposé l'une de l'autre.

4. Système de traitement thermique (1000) selon l'une quelconque des revendications précédentes, dans lequel la conduite (100) comprend une paroi (103) comprenant les électrodes (410, 420, 430), et un matériau électriquement isolant (402) configuré entre les électrodes (410, 420, 430), dans lequel une distance la plus courte entre les électrodes (410, 420, 430) et l'axe de conduite (110) définit une distance électrode-axe (452), dans lequel l'appareil (1) comprend en outre un écran (450) configuré coaxialement à l'axe de conduite (110) autour de la conduite (100) au niveau de la zone de chauffage RF (5), dans lequel une distance la plus courte entre l'axe de conduite (110) et l'écran (450) définit une distance écran-axe (451), et dans lequel un rapport entre la distance écran-axe (451) et la distance électrode-axe (452) est sélectionné dans la fourchette de 2-6.

5. Système de traitement thermique (1000) selon l'une quelconque des revendications précédentes, dans lequel le système de transport de produit (200) comprend une cartouche (600) destinée à transporter le produit (60) à travers la conduite (100), dans lequel la cartouche (600) comprend un assemblage (i) de l'élément de guidage de champ électrique (440) et (ii) d'un réceptacle à produit (480) comprenant une cavité (485) configurée pour accueillir le produit (60), dans lequel le réceptacle à produit (480) comprend un matériau électriquement isolant (402), dans lequel la cartouche (600) présente un axe de cartouche (610) configuré pour être disposé parallèlement à l'axe de conduite (110) pendant le transport à travers la conduite (100), dans lequel l'élément de guidage de champ électrique (440) et le réceptacle à produit (480) sont configurés adjacents l'un à l'autre le long de l'axe de cartouche (610), dans lequel la cartouche (600) comprend une pluralité d'éléments de guidage de champ électrique (440), dans lequel une longueur (415) de l'électrode principale (410) dans une direction parallèle à l'axe de conduite (110) est égale à ou plus longue qu'une distance la plus courte (615) entre deux éléments de guidage de champ électrique (440) voisins.

6. Système de traitement thermique (1000) selon la revendication 5, dans lequel la cartouche (600) comprend une pluralité d'éléments de guidage de champ électrique (440) et/ou une pluralité de réceptacles à produit (480), dans lequel, en alternance, un élément de guidage de champ électrique (440) et un réceptacle à produit (480) sont configurés adjacents l'un à l'autre le long de l'axe de cartouche (610), dans lequel la cartouche (600) comprend un canal de liquide (150) configuré depuis une première extrémité (601) de la cartouche (600) jusqu'à une deuxième extrémité (602) de la cartouche (600) et configuré pour assurer une connexion fluidique entre la ou les cavités (485) et un extérieur de la cartouche (600) .

7. Système de traitement thermique (1000) selon l'une quelconque des revendications précédentes, dans lequel la conduite (100) comprend en outre :
- un agencement de zones comprenant une zone d'alimentation (4) configurée en amont de la zone de chauffage RF (5), une zone de maintien (6) configurée en aval de la zone de chauffage RF (5), une zone de refroidissement (7) configurée en aval de la zone de maintien (6), et une zone d'extraction (8) configurée en aval de la zone de refroidissement (7),
- un ou plusieurs orifices de liquide (104) configurés dans une ou plusieurs des zones sélectionnées parmi la zone d'alimentation (4), la zone de chauffage RF (5), la zone de maintien (6), la zone de refroidissement (7) et la zone d'extraction (8) pour fournir le liquide (2) à la conduite (100) et/ou pour extraire le liquide (2) de la conduite (100),
le système de traitement thermique (1000) étant configuré pour induire une direction d'écoulement du liquide (2) dans la conduite (100) dans une première zone parmi les zones respectives (4, 5, 6, 7, 8) indépendamment de la direction d'écoulement du liquide (2) dans une autre zone parmi les zones respectives (4, 5, 6, 7, 8) en fournissant le liquide (2) à la conduite (100) et/ou en extrayant le liquide (2) de la conduite (100) par le biais d'un ou plusieurs des orifices de liquide (104).

8. Système de traitement thermique (1000) selon la revendication 6 et la revendication 7, dans lequel la cartouche (600) comprend une ouverture (650) configurée à un bord (604) de la cartouche (600), configurée pour recevoir le liquide (2) fourni par le biais d'au moins un des orifices de liquide (104), dans lequel l'ouverture (650) est configurée en connexion fluidique avec le canal de liquide (150), dans lequel la cartouche (600) est configurée pour recevoir le liquide (2) fourni à l'orifice de liquide (104) et acheminer le liquide (2) à travers le canal de liquide (150) et à travers une ou plusieurs des cavités (485) dans la cartouche (600) le long d'un ou plusieurs produits (60) accueillis par la cartouche (600).

9. Système de traitement thermique (1000) selon l'une quelconque des revendications précédentes, dans lequel l'élément de guidage de champ électrique (440) comprend un élément de couplage interne de champ (444) configuré pour dévier au moins une partie du premier champ électrique (490) vers le produit (60) pendant le transport du produit (60) à travers la zone de chauffage RF (5) et/ou pour dévier au moins une partie du champ électrique supplémentaire (495) vers le produit (60) pendant le transport du produit (60) à travers la zone de chauffage RF (5).

10. Cartouche (600) destinée à transporter un produit (60) à travers une conduite (100) d'un appareil de traitement thermique (1) comprenant un champ électrique (490) généré dans la conduite (100) par un générateur RF (400), la cartouche (600) comprenant un assemblage (i) d'un élément de guidage de champ électrique (440) comprenant un matériau électriquement conducteur (401), et (ii) d'un réceptacle à produit (480) comprenant un matériau électriquement isolant (402), le réceptacle à produit (480) comprenant une cavité (485) pour accueillir le produit (60), la cartouche (600) comprenant un canal de liquide (150) assurant une connexion fluidique entre la cavité (485) et un extérieur de la cartouche (600).

11. Cartouche (600) selon la revendication 10, la cartouche (600) présentant un axe de cartouche (610) configuré pour être disposé parallèlement à un axe de conduite (110) de la conduite (100) pendant le transport à travers la conduite (100), dans laquelle l'élément de guidage de champ électrique (440) et le réceptacle à produit (480) sont configurés adjacents l'un à l'autre le long de l'axe de cartouche (610), la cartouche (600) comprenant une pluralité d'éléments de guidage de champ électrique (440) et/ou une pluralité de réceptacles à produit (480), dans laquelle, en alternance, un élément de guidage de champ électrique (440) et un réceptacle à produit (480) sont configurés adjacents l'un à l'autre le long de l'axe de cartouche (610), dans laquelle le canal de liquide (150) est configuré pour assurer une connexion fluidique depuis une première extrémité (601) de la cartouche (610) jusqu'à une deuxième extrémité (602) de la cartouche (600), dans laquelle un rapport entre une aire de section transversale maximale (648) de la cartouche (600) et une aire de section transversale interne (108) de la conduite (100) est sélectionné pour être inférieur à 1 et d'au moins 0,8, la cartouche comprenant un élément d'alignement (607) destiné à aligner l'axe de cartouche (610) avec l'axe de conduite (110) et un élément de scellement (606) configuré pour bloquer un écoulement du liquide (2) le long d'une surface externe (481) de la cartouche (600) depuis la première extrémité (601) de la cartouche (600) jusqu'à la deuxième extrémité (602) de la cartouche (600) pendant le transport à travers la conduite (100), la cartouche (600) comprenant en outre une ouverture (650) configurée à un bord (604) de la cartouche (600), configurée pour recevoir le liquide (2) fourni par le biais d'un orifice de liquide (104) dans la conduite (100), dans laquelle l'ouverture (650) est configurée en connexion fluidique avec le canal de liquide (150).

12. Cartouche (600) selon l'une quelconque des revendications 10 et 11, dans laquelle l'élément de guidage de champ électrique (440) comprend un élément de couplage interne de champ (444) configuré pour dévier au moins une partie du champ électrique (490) vers le produit (60) pendant le transport du produit (60) à travers la zone de chauffage RF (5).

13. Procédé destiné à traiter thermiquement un produit (60), le procédé comprenant :
- le transport du produit (60) et d'un élément de guidage de champ électrique (440) à travers une zone de chauffage RF (5) dans une conduite (100) le long d'un axe de conduite (110) de la conduite (100), la conduite (100) comprenant un liquide (2), et
- la génération d'un champ électrique (490) dans la conduite (100) entre une électrode principale (410) et au moins une contre-électrode (420) parallèle à l'axe de conduite (110),
dans lequel la zone de chauffage RF (5) comprend l'électrode principale (410) et la contre-électrode (420), dans lequel l'élément de guidage de champ électrique (440) comprend un matériau électriquement conducteur (401), dans lequel l'élément de guidage de champ électrique (440) est isolé électriquement des électrodes (410, 420) pendant le transport à travers la conduite (100).

14. Procédé selon la revendication 13, comprenant :
- le transport d'une cartouche (600) à travers la zone de chauffage RF (5) dans la conduite (100), le long de l'axe de conduite (110), pendant la génération du champ électrique (490) dans la conduite (100) entre l'électrode principale (410) et l'au moins une contre-électrode (420) parallèle à l'axe de conduite (110), un axe de cartouche (610) de la cartouche (600) étant disposé parallèlement à l'axe de conduite (110),
la cartouche (600) comprenant un assemblage (i) de l'élément de guidage de champ électrique (440) et (ii) d'un réceptacle à produit (480) comprenant un matériau électriquement isolant (402), le réceptacle à produit (480) comprenant une cavité (485) accueillant le produit (60) et configurée en connexion fluidique avec le liquide (2) dans la conduite (100), l'élément de guidage de champ électrique (440) et le réceptacle à produit (480) étant configurés adjacents l'un à l'autre le long de l'axe de conduite (110) ; et
- l'induction d'un écoulement du liquide (2) dans la conduite (100), l'écoulement présentant une direction d'écoulement, la direction d'écoulement étant sélectionnée indépendamment d'une direction du transport du produit (60) à travers la zone de chauffage RF (5) dans la conduite (100).

15. Procédé selon l'une quelconque des revendications 13 et 14, dans lequel la conduite (100) comprend :
- un agencement de zones comprenant une zone d'alimentation (4) configurée en amont de la zone de chauffage RF (5), une zone de maintien (6) configurée en aval de la zone de chauffage RF (5), une zone de refroidissement (7) configurée en aval de la zone de maintien (6), et une zone d'extraction (8) configurée en aval de la zone de refroidissement (7),
- un ou plusieurs orifices de liquide (104) configurés dans une ou plusieurs des zones sélectionnées parmi la zone d'alimentation (4), la zone de chauffage RF (5), la zone de maintien (6), la zone de refroidissement (7) et la zone d'extraction (8),
le procédé comprenant :
- le transport du produit (60) et de l'élément de guidage de champ électrique (440) depuis la zone d'alimentation (4) jusqu'à la zone de refroidissement (7) le long de l'axe de conduite (110),
le procédé comprenant en outre :
- l'induction d'une direction d'un écoulement du liquide (2) dans la conduite (100) dans une ou plusieurs des zones respectives (4, 5, 6, 7, 8) par fourniture du liquide (2) à la conduite (100) et/ou extraction du liquide (2) de la conduite (100) par le biais d'un ou plusieurs orifices donnés parmi les orifices de liquide (104), dans lequel le liquide (2) est acheminé par le biais d'un canal de liquide (150) dans la cartouche (600) le long du produit (60) accueilli dans la cavité (485), dans lequel une ouverture (605) dans la cartouche (600) configurée à un bord (604) de la cartouche (600) assure une connexion fluidique entre le canal de liquide (150) et le ou les orifices donnés parmi les orifices de liquide (104), dans lequel la direction de l'écoulement de liquide (2) dans la conduite (100) dans l'une quelconque des zones respectives (4, 5, 6, 7, 8) est sélectionnée indépendamment de la direction du transport du produit à travers la conduite (100).
